# FASCICULE DE BREVET EUROPEEN

(11) **EP 2 015 247 B1**
(45) Date de publication et mention de la délivrance du brevet: **13.04.2016**
(21) Numéro de dépôt: 08100657.9
(22) Date de dépôt: 05.06.2002
(51) Int. Cl.: G06T 1/00

(54) **PROCEDE ET SYSTEME POUR FOURNIR DES INFORMATIONS FORMATEES A DE MOYENS DE TRAITEMENT D'IMAGES**
Verfahren und System zur Übermittlung von nach einem Standardformat formatierten Informationen an Bildverarbeitungsmodule
Method and system for supplying in a standard format information formatted for image processing means

(30) Priorité: 12.07.2001 FR 0109291; 12.07.2001 FR 0109292
(43) Date de publication de la demande: 14.01.2009
(62) Demande divisionnaire de: 02748933.5
(73) Titulaire: DO LABS, 92100 Boulogne Billancourt (FR)
(72) Inventeur: Liege, Bruno, 92100 Boulogne (FR); Guichard, Frédéric, 75012 Paris (FR)
(74) Mandataire: Ipside

(56) Documents cités:
- SUKTHANKAR R ET AL: "Smarter presentations: exploiting homography in camera-projector systems" PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, vol. 1, 7 juillet 2001 (2001-07-07), pages 247-253, XP010553989 ISBN: 978-0-7695-1143-6
- WATANABE M ET AL: "AN IMAGE DATA FILE FORMAT FOR DIGITAL STILL CAMERA" FINAL PROGRAM AND ADVANCE PRINTING OF PAPERS. ANNUAL CONFERENCE. IMAGING ON THE INFORMATION SUPERHIGHWAY, XX, XX, 1995, pages 421-424, XP000618775

## Description

### Préambule de la description

### Domaine concerné, problème posé

La présente invention concerne un procédé et un système pour fournir, selon un format standard, des informations formatées à des moyens de traitement d'images.

Il est connu des systèmes corrigeant la distorsion lors d'une projection d'une image sur un écran, notamment décrits dans « Smarter presentation : exploiting homography in camera-projector systems », de Sukthankar et al., « Proc. 8th IEEE International Conference on Computer Vision» ICCV, 7 à 14 juillet 2001, Vancouver, Canada, vol. 1 pages 247 à 253

. Il est par ailleurs connu le format EXIF, notamment décrit dans " An image data file format for digital still camera", de Watarabe et al., conférence annuelle «imaging on the information Superhighway», 1995, pages 421 à 424.

### Solution

L'invention est définie dans les revendications indépendants 1 et 13. Les revendications dependants définissent des modes de réalisation particulières.

### Procédé

L'invention concerne un procédé pour fournir, selon un format standard, des informations formatées à des moyens de traitement d'images, notamment des logiciels et/ou des composants. Les informations formatées sont liées aux défauts d'une chaîne d'appareils. La chaîne d'appareils comprend notamment au moins un appareil de restitution d'image. Les moyens de traitement d'images utilisent les informations formatées pour modifier la qualité d'au moins une image provenant ou destinée à la chaîne d'appareils. Les informations formatées comportent, des données caractérisant des défauts de l'appareil de restitution des images, notamment les caractéristiques de distorsion.

Le procédé comprend l'étape de renseigner au moins un champ du format standard avec les informations formatées. Le champ est désigné par un nom de champ. Le champ contenant au moins une valeur de champ.

De préférence, selon l'invention le procédé est tel que le champ est relatif aux défauts de piqué de l'appareil de restitution d'image. Le procédé est tel que le champ contient au moins une valeur relative aux défauts de piqué de l'appareil de restitution d'image.

De préférence, selon l'invention le procédé est tel que le champ est relatif aux défauts de colorimétrie de l'appareil de restitution d'image. Le procédé est tel que le champ contient au moins une valeur relative aux défauts de colorimétrie de l'appareil de restitution d'image.

De préférence, selon l'invention le procédé est tel que le champ est relatif aux défauts géométriques de distorsion et/ou aux défauts géométriques d'aberration chromatique de l'appareil de restitution d'image. Le procédé est tel que le champ contient au moins une valeur relative aux défauts géométriques de distorsion et/ou aux défauts géométriques d'aberration chromatique de l'appareil de restitution d'image.

De préférence, selon l'invention le procédé est tel que le champ est relatif aux défauts géométriques de vignetage et/ou aux défauts de contraste de l'appareil de restitution d'image. Le procédé est tel que le champ contient au moins une valeur relative aux défauts géométriques de vignetage et/ou aux défauts de contraste de l'appareil de restitution d'image.

De préférence, selon l'invention le procédé est tel que le champ contient au moins une valeur relative à des écarts.

De préférence, selon l'invention les informations formatées sont composées au moins en partie des paramètres d'un modèle de transformation paramétrable représentatif des défauts de piqué de l'appareil de restitution. Le procédé est tel que la ou les valeurs contenues dans le champ relatif aux défauts de piqué sont composées au moins en partie des paramètres du modèle de transformation paramétrable. Il résulte de la combinaison des traits techniques que les moyens de traitement d'image peuvent utiliser les paramètres du modèle de transformation paramétrable pour calculer la forme corrigée ou la forme corrigée de restitution d'un point de l'image.

De préférence, selon l'invention les informations formatées sont composées au moins en partie des paramètres d'un modèle de transformation paramétrable représentatif des défauts de colorimétrie de l'appareil de restitution. Le procédé est tel que la ou les valeurs contenues dans le champ relatif aux défauts de colorimétrie sont composées au moins en partie des paramètres du modèle de transformation paramétrable. Il résulte de la combinaison des traits techniques que les moyens de traitement d'image peuvent utiliser les paramètres du modèle de transformation paramétrable pour calculer la couleur corrigée ou la couleur corrigée de restitution d'un point de l'image.

De préférence, selon l'invention les informations formatées sont composées au moins en partie des paramètres d'un modèle de transformation paramétrable représentatif des défauts géométriques de distorsion et/ou des défauts géométriques d'aberration chromatique /ou de l'appareil de restitution. Le procédé est tel que la ou les valeurs contenues dans le champ relatif aux défauts géométriques de distorsion et/ou aux défauts géométriques d'aberration chromatique sont composées au moins en partie des paramètres du modèle de transformation paramétrable. Il résulte de la combinaison des traits techniques que les moyens de traitement d'image peuvent utiliser les paramètres du modèle de transformation paramétrable pour calculer la position corrigée ou la position corrigée de restitution d'un point de l'image.

De préférence, selon l'invention les informations formatées sont composées au moins en partie des paramètres d'un modèle de transformation paramétrable représentatif des défauts géométriques de vignetage et/ou des défauts de contraste de l'appareil de restitution. Le procédé est tel que la ou les valeurs contenues dans le champ relatif aux défauts géométriques de vignetage et/ou aux défauts de contraste sont composées au moins en partie des paramètres du modèle de transformation paramétrable. Il résulte de la combinaison des traits techniques que les moyens de traitement d'image peuvent utiliser les paramètres du modèle de transformation paramétrable pour calculer l'intensité corrigée ou l'intensité corrigée de restitution d'un point de l'image.

### Association des informations formatées à l'image

De préférence, selon l'invention, pour fournir, selon un format standard, les informations formatées aux moyens de traitement d'images, le procédé comprend en outre l'étape d'associer les informations formatées à l'image.

De préférence, selon l'invention, l'image est diffusée sous la forme d'un fichier. Le fichier comprend en outre les informations formatées.

### Focale variable

De préférence, selon l'invention, l'appareil de restitution d'image comporte au moins une caractéristique variable selon l'image, notamment la focale. Au moins un des défauts, notamment le défaut géométrique de distorsion, de l'appareil de restitution d'image dépend de la caractéristique variable. Le procédé est tel que au moins un des champ contient au moins une valeur fonction de la caractéristique variable selon l'image. Il résulte de la combinaison des traits techniques que les moyens de traitement d'image peuvent traiter l'image en fonction des caractéristiques variables.

### Informations formatées mesurées

De préférence, selon l'invention, les informations formatées sont au moins en partie des informations formatées mesurées. Ainsi, dans le cas de cette variante de réalisation, les écarts sont faibles.

De préférence, selon l'invention, les informations formatées sont au moins en partie des informations formatées étendues. Ainsi, dans le cas de cette variante de réalisation, les informations formatées occupent peu de mémoire. Ainsi également, les calculs de traitement des images sont plus rapides.

L'image peut être composée de plans couleur. De préférence dans le cas de cette variante de réalisation selon l'invention, les informations formatées sont au moins en partie relatives aux plans couleur. Il résulte de la combinaison des traits techniques que le traitement de l'image peut être séparé en des traitements relatifs à chaque plan couleur. Il résulte de la combinaison des traits techniques qu'en décomposant l'image en plans couleurs avant traitement, on peut se ramener à des valeurs positives de pixels dans les plans couleur.

### Système

L'invention concerne un système pour fournir, selon un format standard, des informations formatées à des moyens de traitement d'images, notamment des logiciels et/ou des composants. Les informations formatées sont liées aux défauts d'une chaîne d'appareils. La chaîne d'appareils comprend notamment au moins un appareil de restitution d'image. Les moyens de traitement d'images utilisent les informations formatées pour modifier la qualité d'au moins une image provenant ou destinée à la chaîne d'appareils. Les informations formatées comportent des données caractérisant des défauts de l'appareil de restitution des images, notamment les caractéristiques de distorsion.

Le système comprend des moyens de traitement informatiques pour renseigner au moins un champ du format standard avec les informations formatées. Le champ est désigné par un nom de champ. Le champ contenant au moins une valeur de champ.

De préférence, selon l'invention, le système est tel que le champ est relatif aux défauts de piqué de l'appareil de restitution d'image. Le système est tel que le champ contient au moins une valeur relative aux défauts de piqué de l'appareil de l'appareil de restitution d'image.

De préférence, selon l'invention, le système est tel que le champ est relatif aux défauts de colorimétrie de l'appareil de restitution d'image. Le système est tel que le champ contient au moins une valeur relative aux défauts de colorimétrie de l'appareil de restitution d'image.

De préférence, selon l'invention, le système est tel que le champ est relatif aux défauts géométriques de distorsion et/ou aux défauts géométriques d'aberration chromatique de l'appareil de restitution d'image. Le système est tel que le champ contient au moins une valeur relative aux défauts géométriques de distorsion et/ou aux défauts géométriques d'aberration chromatique de l'appareil de restitution d'image.

De préférence, selon l'invention, le système est tel que le champ est relatif aux défauts géométriques de vignetage et/ou aux défauts de contraste de l'appareil de restitution d'image. Le système est tel que le champ contient au moins une valeur relative aux défauts géométriques de vignetage et/ou aux défauts de contraste l'appareil de restitution d'image.

De préférence, selon l'invention, le système est tel que le champ contient au moins une valeur relative à des écarts.

De préférence, selon l'invention, les informations formatées sont composées au moins en partie des paramètres d'un modèle de transformation paramétrable représentatif des défauts de piqué de l'appareil de restitution. Le système est tel que la ou les valeurs contenues dans le champ relatif aux défauts de piqué sont composées au moins en partie des paramètres du modèle de transformation paramétrable.

De préférence, selon l'invention, les informations formatées sont composées au moins en partie des paramètres d'un modèle de transformation paramétrable représentatif des défauts de colorimétrie de l'appareil de l'appareil de restitution. Le système est tel que la ou les valeurs contenues dans le champ relatif aux défauts de colorimétrie sont composées au moins en partie des paramètres du modèle de transformation paramétrable.

De préférence, selon l'invention, les informations formatées sont composées au moins en partie des paramètres d'un modèle de transformation paramétrable représentatif des défauts géométriques de distorsion et/ou des défauts géométriques d'aberration chromatique de l'appareil de restitution. Le système est tel que la ou les valeurs contenues dans le champ relatif aux défauts géométriques de distorsion et/ou aux défauts géométriques d'aberration chromatique sont composées au moins en partie des paramètres du modèle de transformation paramétrable.

De préférence, selon l'invention, les informations formatées sont composées au moins en partie des paramètres d'un modèle de transformation paramétrable représentatif des défauts géométriques de vignetage et/ou des défauts de contraste de l'appareil de restitution. Le système est tel que la ou les valeurs contenues dans le champ relatif aux défauts géométriques de vignetage et/ou aux défauts de contraste sont composées au moins en partie des paramètres du modèle de transformation paramétrable.

### Association des informations formatées à l'image

De préférence, selon l'invention, pour fournir, selon un format standard, les informations formatées aux moyens de traitement d'images, le système comprend en outre des moyens de traitement informatique pour associer les informations formatées à l'image.

De préférence, selon l'invention, le système comporte des moyens de diffusion pour diffuser l'image sous la forme d'un fichier. Le fichier comprend en outre les informations formatées.

### Focale variable

L'appareil de restitution d'image peut comporter au moins une caractéristique variable selon l'image, notamment la focale. Au moins un des défauts, notamment le défaut géométrique de distorsion de l'appareil de restitution d'image dépendent de la caractéristique variable. De préférence dans le cas de cette variante de réalisation selon l'invention, le système est tel que au moins un des champ contient au moins une valeur fonction de la caractéristique variable selon l'image.

### Variantes d'informations formatées

De préférence, selon l'invention, les informations formatées sont au moins en partie des informations formatées mesurées.

De préférence, selon l'invention, les informations formatées sont au moins en partie des informations formatées étendues.

L'image peut être composée de plans couleur. De préférence dans le cas de cette variante de réalisation selon l'invention, les informations formatées sont au moins en partie relatives aux plans couleur.

### Description détaillée

D'autres caractéristiques et avantages de l'invention apparaîtront à la lecture de la description des variantes de réalisation de l'invention donnée à titre d'exemple indicatif et non limitatif, et des figures qui représentent respectivement :
- figure 1 : une vue schématique d'une capture d'image,
- figure 2 : une vue schématique d'une restitution d'image,
- figure 3 : une vue schématique des pixels d'une image,
- figures 4a et 4b : deux vues schématiques d'une scène de référence,
- figure 5 : l'organigramme de la méthode permettant de calculer la différence entre l'image mathématique et l'image corrigée,
- figure 6 : l'organigramme de la méthode permettant d'obtenir la meilleure transformation de restitution pour un moyen de restitution d'image,
- figure 7 : une vue schématique des éléments composant le système selon l'invention,
- figure 8 : une vue schématique des champs des informations formatées,
- figure 9a : une vue schématique de face d'un point mathématique,
- figure 9b : une vue schématique de face d'un point réel d'une image,
- figure 9c : une vue schématique de profil d'un point mathématique,
- figure 9d : une vue schématique de profil d'un point réel d'une image,
- figure 10 : une vue schématique d'une grille de points caractéristiques,
- figure 11 : l'organigramme de la méthode permettant d'obtenir les informations formatées,
- figure 12 : l'organigramme de la méthode permettant d'obtenir la meilleure transformation pour un appareil de capture d'image,
- figure 13 : l'organigramme de la méthode permettant de modifier la qualité d'une image provenant ou destinée à une chaîne d'appareil,
- figure 14 : un exemple de fichier contenant des informations formatées,
- figure 15 : un exemple d'informations formatées,
- figure 16 : une représentation de paramètres de modèles paramétrables,
- figure 17 : l'organigramme de la méthode permettant d'obtenir la meilleure transformation pour un appareil de restitution d'image.

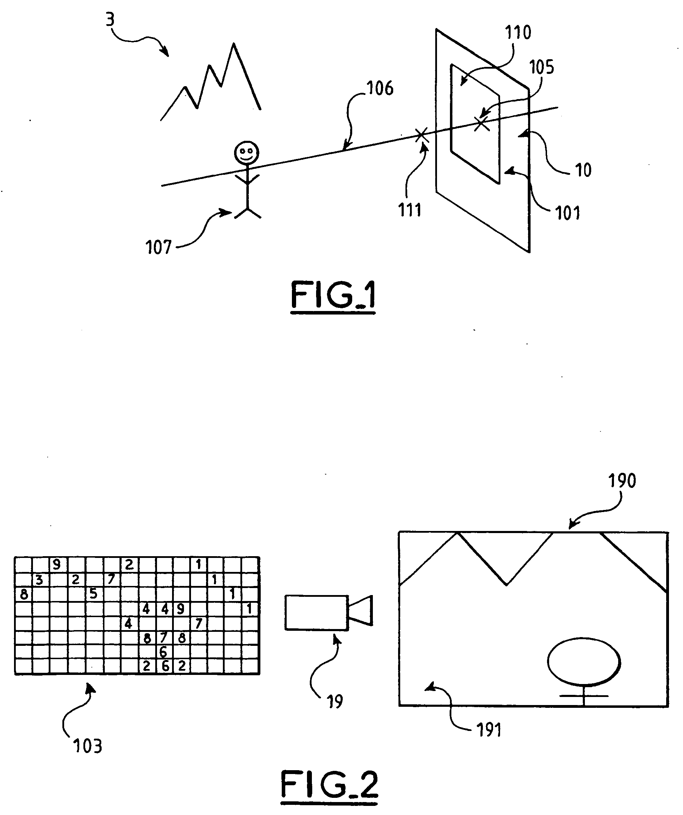

Sur la figure 1, on a représenté : une scène 3 comportant un objet 107, un capteur 101 et la surface du capteur 110, un centre optique 111, un point d'observation 105 sur une surface du capteur 110, une direction d'observation 106 passant par le point d'observation 105, le centre optique 111, la scène 3, une surface 10 géométriquement associée à la surface du capteur 110.

Sur la figure 2, on a représenté une image 103, un moyen de restitution d'image 19 et une image restituée 191 obtenue sur le support de restitution 190.

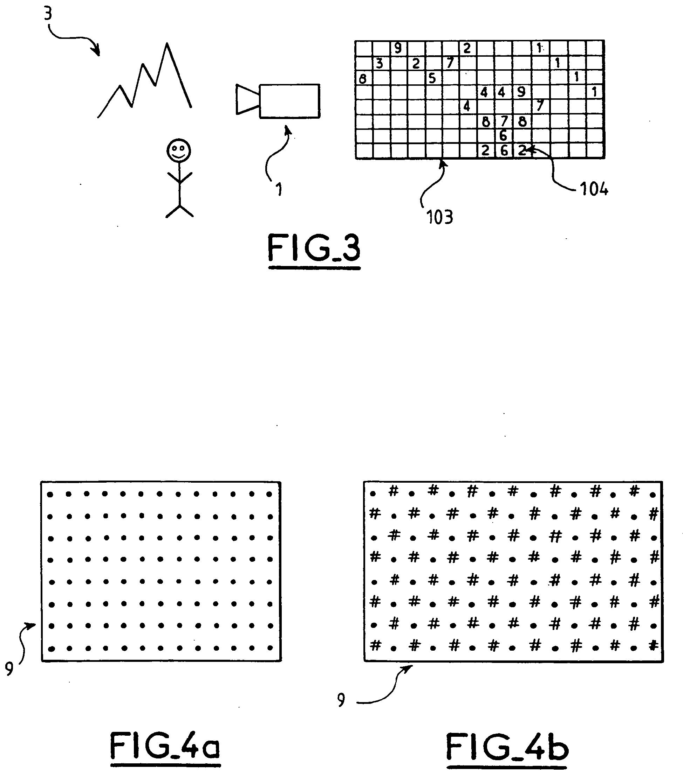

Sur la figure 3 on a représenté une scène 3, un appareil de capture d'image 1 et une image 103 constituée de pixels 104.

Sur les figures 4a et 4b, on a représenté deux variantes d'une scène de référence 9.

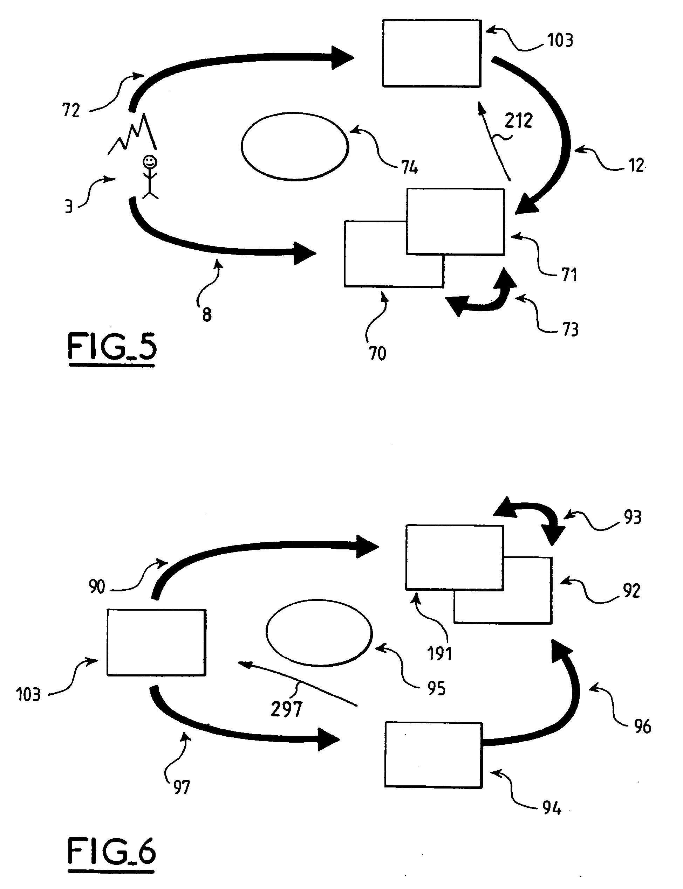

Sur la figure 5 on a représenté un organigramme mettant en oeuvre une scène 3, une projection mathématique 8 donnant une image mathématique 70 de la scène 3, une projection réelle 72 donnant une image 103 de la scène 3 pour les caractéristiques utilisées 74, un modèle de transformation paramétrable 12 donnant une image corrigée 71 de l'image 103, l'image corrigée 71 présentant une différence 73 avec l'image mathématique 70.

Sur la figure 6 on a représenté un organigramme mettant en oeuvre une image 103, une projection réelle de restitution 90 donnant une image restituée 191 de l'image 103 pour les caractéristiques de restitution utilisées 95, un modèle de transformation paramétrable de restitution 97 donnant une image corrigée de restitution 94 de l'image 103, une projection mathématique de restitution 96 donnant une image mathématique de restitution 92 de l'image corrigée de restitution 94 et présentant une différence de restitution 93 avec l'image restituee 191.

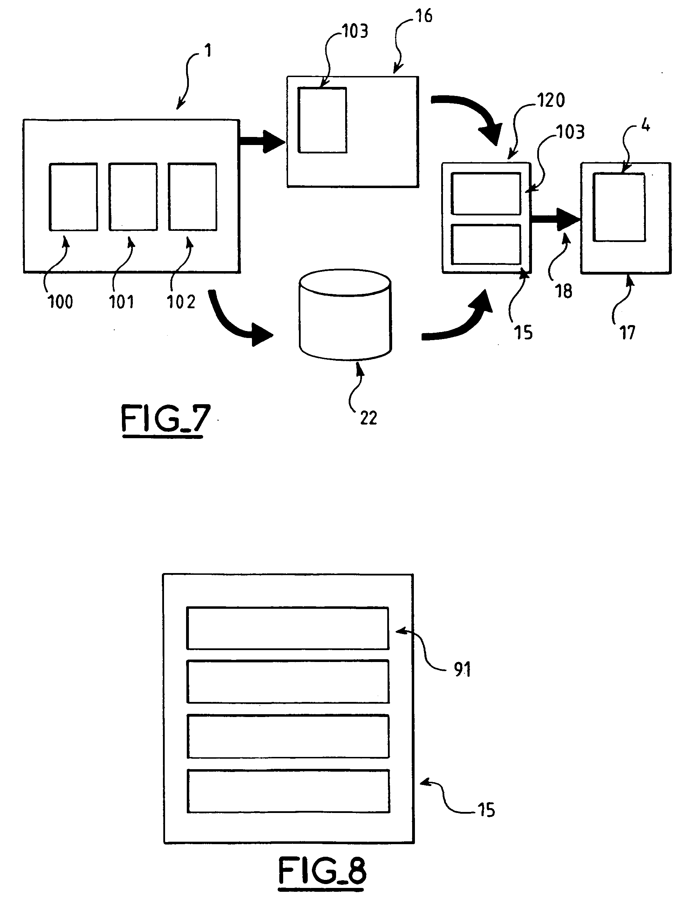

Sur la figure 7 on a représenté un système comprenant un appareil de capture d'image 1 constitué d'une optique 100, d'un capteur 101 et d'une électronique 102. Sur la figure 7 on a également représenté une zone mémoire 16 contenant une image 103, une base de données 22 contenant des informations formatées 15, des moyens de transmission 18 de l'image complétée 120 constituée de l'image 103 et des informations formatées 15 vers des moyens de calcul 17 contenant des logiciels de traitement d'image 4.

Sur la figure 8 on a représenté des informations formatées 15 constituées de champs 91.

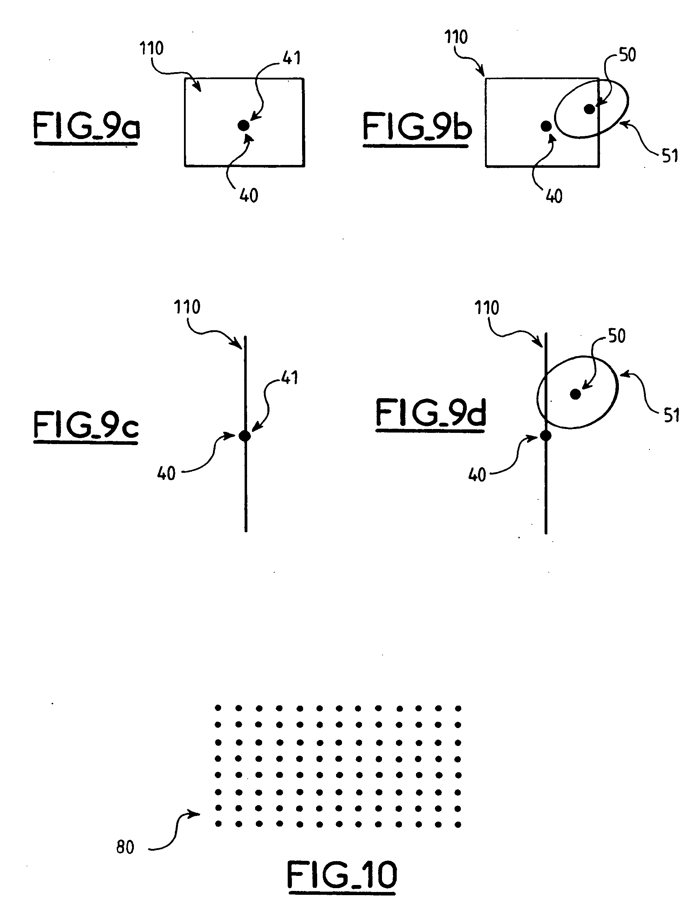

Sur les figures 9a à 9d on a représenté une image mathématique 70, une image 103, la position mathématique 40 d'un point, la forme mathématique 41 d'un point, comparés à la position réelle 50 et à la forme réelle 51 du point correspondant de l'image.

Sur la figure 10 on a représenté une grille 80 de points caractéristiques.

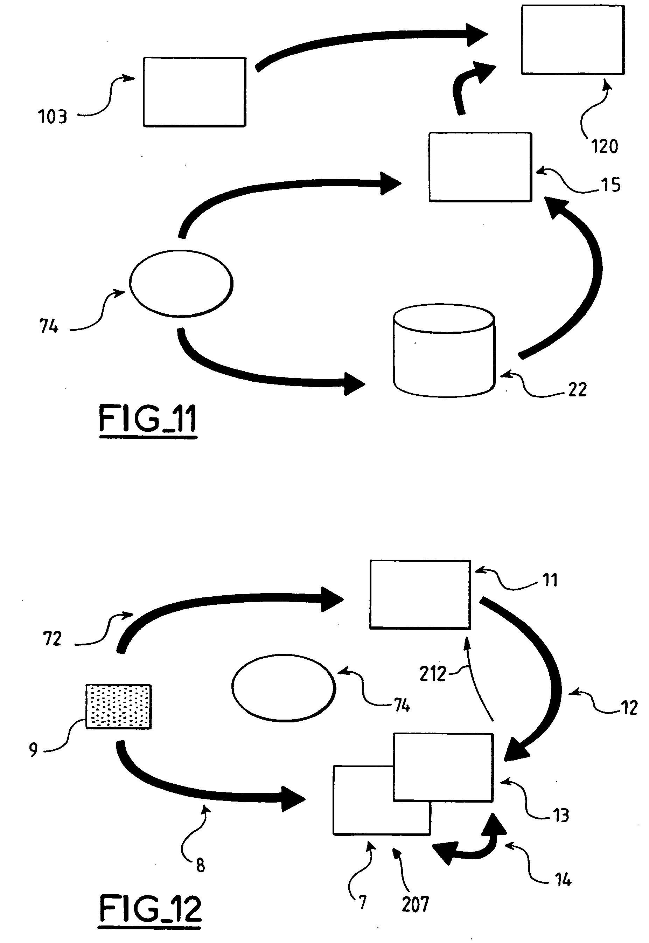

Sur la figure 11 on a représenté un organigramme mettant en oeuvre une image 103, des caractéristiques utilisées 74, une base de données de caractéristiques 22. Les informations formatées 15 sont obtenues à partir des caractéristiques utilisées 74 et stockées dans la base de données 22. L'image complétée 120 est obtenue à partie de l'image 103 et des informations formatées 15.

Sur la figure 12 on a représenté un organigramme mettant en oeuvre une scène de référence 9, une projection mathématique 8 donnant une classe d'image de synthèse 7 de la scène de référence 9, une projection réelle 72 donnant une image de référence 11 de la scène de référence 9 pour les caractéristiques utilisées 74. Cet organigramme met également en oeuvre un modèle de transformation paramétrable 12 donnant une image transformée 13 de l'image de référence 11. L'image transformée 13 présente un écart 14 avec la classe d'image de synthèse 7.

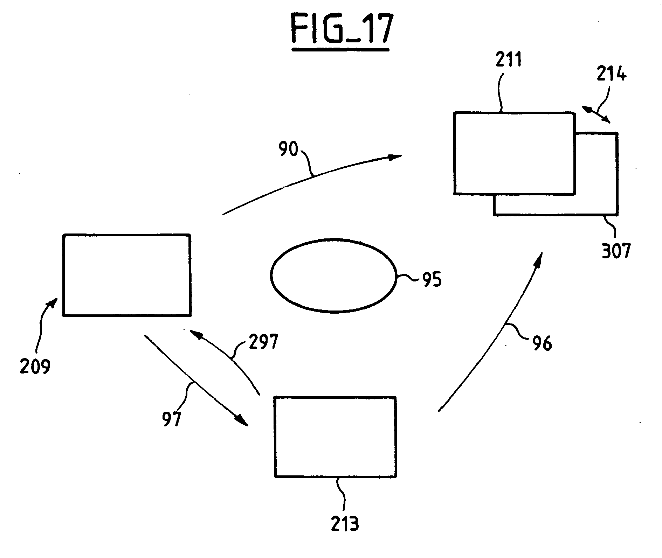

Sur la figure 17 on a représenté un organigramme mettant en oeuvre une référence de restitution 209, une projection réelle de restitution 90 donnant une référence restituée 211 de ladite référence de restitution 209 pour les caractéristiques de restitution utilisées 95, un modèle de transformation paramétrable de restitution 97 donnant une image de référence corrigée de restitution 213 de ladite référence de restitution 209, un modèle de transformation paramétrable de restitution inverse 297 produisant à partir de ladite image de référence corrigée de restitution 213, ladite référence de restitution 209. Cet organigramme met également en oeuvre une projection mathématique de restitution 96 donnant image de synthèse de restitution 307 de l'image de référence corrigée de restitution 213. Ladite image de synthèse de restitution 307 présente un écart de restitution 214 avec la référence restituée 211.

### Définitions et description détaillée

D'autres caractéristiques et avantages de l'invention apparaîtront à la lecture :
- des définitions, ci-après explicitées, des termes techniques employés illustrées en se référant aux exemples indicatifs et non limitatifs des figures 1 à 17,
- de la description des figures 1 à 17.

### Scène

On appelle scène 3 un lieu dans l'espace à trois dimensions, qui comprend des objets 107 éclairés par des sources lumineuses .

### Appareil de capture d'image, Image, Capture d'image

On va maintenant décrire en se référant aux figures 3 et 7, ce que l'on entend par appareil de capture d'image 1 et image 103. On appelle appareil de capture d'image 1, un appareil constitué d'une optique 100, d'un ou de plusieurs capteurs 101, d'une électronique 102, d'une zone mémoire 16. Ledit appareil de capture d'image 1 permet à partir d'une scène 3 d'obtenir des images numériques fixes 103 ou animées enregistrées dans la zone mémoire 16 ou transmises à un dispositif externe. Des images animées sont constituées d'une succession dans le temps, d'images fixes 103. Ledit appareil de capture d'image 1 peut prendre la forme notamment d'un appareil photo, d'un caméscope, d'une caméra reliée ou intégrée à un PC, d'une caméra reliée ou intégrée à un assistant personnel, d'une caméra reliée ou intégrée à un téléphone, d'un appareil de visioconférence ou d'une caméra ou appareil de mesure sensible à d'autres longueurs d'onde que celles de la lumière visible comme par exemple une caméra thermique.

On appelle capture d'image le procédé consistant en le calcul de l'image 103 par l'appareil de capture d'image 1.

Dans le cas où un appareil comporte plusieurs sous-ensembles interchangeables, en particulier une optique 100, on appelle appareil de capture d'image 1, une configuration particulière de l'appareil.

### Moyen de restitution d'image, Image restituée, Restitution d'image

On va maintenant décrire en se référant à la figure 2 ce que l'on entend par moyen de restitution d'image 19. Un tel moyen de restitution d'image 19 peut prendre la forme notamment d'un écran de visualisation, d'un téléviseur, d'un écran plat, d'un projecteur, de lunettes de réalité virtuelle, d'une imprimant.

Un tel moyen de restitution d'image 19 comprend :
- une électronique,
- une ou plusieurs sources de lumière, d'électrons ou d'encre,
- un ou plusieurs modulateurs : dispositifs de modulation de lumière, d'électrons ou d'encre,
- un dispositif de focalisation, se présentant notamment sous la forme d'une optique dans le cas d'un projecteur lumineux, ou sous la forme de bobines de focalisation de faisceau électronique dans le cas d'un écran à tube cathodique, ou sous la forme de filtres dans le cas d'un écran plat,
- d'un support de restitution 190 se présentant notamment sous la forme d'un écran dans le cas d'un écran à tube cathodique, d'un écran plat ou d'un projecteur, sous la forme d'un support d'impression sur lequel l'impression est effectuée dans le cas d'une imprimante, ou sous la forme d'une surface virtuelle dans l'espace dans le cas d'un projecteur à image virtuelle.

Ledit moyen de restitution d'image 19 permet à partir d'une image 103 d'obtenir une image restituée 191 sur le support de restitution 190.

Des images animées sont constituées d'une succession dans le temps, d'images fixes.

On appelle restitution d'image le procédé consistant en l'affichage ou l'impression de l'image par le moyen de restitution d'image 19.

Dans le cas où un moyen de restitution 19 comporte plusieurs sous-ensembles interchangeables ou pouvant se déplacer relativement l'un par rapport à l'autre, en particulier le support de restitution 190, on appelle moyen de restitution d'image 19 une configuration particulière.

### Surface du capteur, Centre optique, Distance focale

On va maintenant décrire en se référant à la figure 1 ce que l'on appelle surface du capteur 110.

On appelle surface du capteur 110, la forme dans l'espace dessinée par la surface sensible du capteur 101 de l'appareil de capture d'image 1 au moment de la capture d'image. Cette surface est généralement plane.

On appelle centre optique 111 un point dans l'espace associé à l'image 103 au moment de la capture d'image. On appelle distance focale la distance entre ce point 111 et le plan 110, dans le cas où la surface du capteur 110 est plane.

### Pixel, Valeur de pixel, Temps de pose

On va maintenant décrire, en se référant à la figure 3, ce que l'on entend par pixel 104 et valeur de pixel.

On appelle pixel 104, une zone élémentaire de la surface du capteur 110 obtenue en créant un pavage généralement régulier, de ladite surface du capteur 110. On appelle valeur de pixel, un nombre associé à ce pixel 104.

Une capture d'image consiste à déterminer la valeur de chaque pixel 104. L'ensemble de ces valeurs constitue l'image 103.

Lors d'une capture d'image, la valeur de pixel est obtenue par l'intégration sur la surface du pixel 104, pendant une période de temps appelée temps de pose, d'une partie du flux lumineux provenant de la scène 3 à travers l'optique 100 et par conversion du résultat de cette intégration en valeur numérique. L'intégration du flux lumineux et/ou la conversion du résultat de cette intégration en valeur numérique sont effectuées au moyen de l'électronique 102.

Cette définition de la notion de valeur de pixel s'applique au cas des images 103 en noir et blanc ou en couleur, qu'elles soient fixes ou animées.

Cependant, selon les cas, la partie du flux lumineux concernée est obtenue de diverses façons :
a) Dans le cas d'une image 103 en couleurs, la surface du capteur 110 comporte généralement plusieurs types de pixels 104, respectivement associés à des flux lumineux de longueurs d'onde différentes, tels que par exemple des pixels rouges, verts et bleus.
b) Dans le cas d'une image 103 en couleurs, il peut également y avoir plusieurs capteurs 101 juxtaposés qui reçoivent chacun une partie du flux lumineux.
c) Dans le cas d'une image 103 en couleurs, les couleurs utilisées peuvent être différentes de rouge, vert et bleu, comme par exemple pour la télévision NTSC américaine, et peuvent être en nombre supérieur à trois.
d) Enfin, dans le cas d'une caméra de télévision à balayage dit entrelacé, les images animées produites sont constituées d'une alternance d'images 103 comportant les lignes paires, et d'images 103 comportant les lignes impaires.

### Configuration utilisée, Réglages utilisés, Caractéristiques utilisées

On appelle configuration utilisée la liste des sous-ensembles amovibles de l'appareil de capture d'image 1, par exemple l'optique 100 effectivement montée sur l'appareil de capture d'image 1 si elle est interchangeable. La configuration utilisée est caractérisée notamment par :
- le type de l'optique 100,
- le numéro de série de l'optique 100 ou toute autre désignation.

On appelle réglages utilisés :
- la configuration utilisée telle que définie ci-dessus, ainsi que
- la valeur des réglages manuels ou automatiques disponibles dans la configuration utilisée et ayant un impact sur le contenu de l'image 103. Ces réglages peuvent être effectués par l'utilisateur, notamment à l'aide de boutons, ou calculés par l'appareil de capture d'image 1. Ces réglages peuvent être stockés dans l'appareil, notamment sur un support amovible, ou sur tout dispositif connecté à l'appareil. Ces réglages peuvent inclure notamment les réglages de focalisation, de diaphragme, et de focale de l'optique 100, les réglages de temps de pose, les réglages de balance des blancs, les réglages de traitement d'image intégrés comme le zoom numérique, la compression, le contraste,

On appelle caractéristiques utilisées 74 ou jeu de caractéristiques utilisées 74 :
a) Des paramètres liés aux caractéristiques techniques intrinsèques de l'appareil de capture d'image 1, déterminées au moment de la conception de l'appareil de capture d'image 1. Par exemple, ces paramètres peuvent comprendre la formule de l'optique 100 de la configuration utilisée impactant les défauts géométriques et le piqué des images capturées ; la formule de l'optique 100 de la configuration utilisée inclut notamment la forme, la disposition et le matériau des lentilles de l'optique 100.
   Ces paramètres peuvent en outre comprendre :
   - la géométrie du capteur 101, à savoir la surface du capteur 110 ainsi que la forme et la disposition relative des pixels 104 sur cette surface,
   - le bruit généré par l'électronique 102,
   - la loi de conversion flux lumineux en valeur de pixel.
b) Des paramètres liés aux caractéristiques techniques intrinsèques de l'appareil de capture d'image 1, déterminées au moment de la fabrication de l'appareil de capture d'image 1, et notamment :
   - le positionnement exact des lentilles dans l'optique 100 la configurations utilisée,
   - le positionnement exact de l'optique 100 par rapport au capteur 101.
c) Des paramètres liés aux caractéristiques techniques de l'appareil de capture d'image 1, déterminées au moment de la capture de l'image 103 et notamment :
   - la position et l'orientation de la surface du capteur 110 par rapport à la scène 3,
   - les réglages utilisés,
   - les facteurs extérieurs, tels que la température, s'ils ont une influence.
d) Les préférences de l'utilisateur, notamment la température de couleur à utiliser pour la restitution d'images. Ces préférences sont par exemple sélectionnées par l'utilisateur à l'aide de boutons.

### Point d'observation, direction d'observation

On va maintenant décrire en se référant à la figure 1 ce que l'on entend par point d'observation 105 et direction d'observation 106.

On appelle surface mathématique 10 une surface géométriquement associée à la surface du capteur 110. Par exemple, si la surface du capteur est plane, la surface mathématique 10 pourra être confondue avec celle du capteur.

On appelle direction d'observation 106 une droite passant par au moins un point de la scène 3 et par le centre optique 111. On appelle point d'observation 105 l'intersection de la direction d'observation 106 et de la surface 10.

### Couleur observée, Intensité observée

On va maintenant décrire en se référant à la figure 1 ce que l'on entend par couleur observée et intensité observée. On appelle couleur observée la couleur de la lumière émise, transmise ou réfléchie par ladite scène 3 dans ladite direction d'observation 106 à un instant donné, et observée depuis ledit point d'observation 105. On appelle intensité observée l'intensité de la lumière émise par ladite scène 3 dans ladite direction d'observation 106 au même instant, et observée depuis ledit point d'observation 105.

La couleur peut être notamment caractérisée par une intensité lumineuse fonction d'une longueur d'onde, ou encore par deux valeurs telles que mesurées par un colorimètre. L'intensité peut être caractérisée par une valeur telle que mesurée avec un photomètre.

Ladite couleur observée et ladite intensité observée dépendent notamment de la position relative des objets 107 dans la scène 3 et des sources d'éclairage présentes ainsi que des caractéristiques de transparence et de réflexion des objets 107 au moment de l'observation.

### Projection mathématique, Image mathématique, Point mathématique, Couleur mathématique d'un point, Intensité mathématique d'un point, Forme mathématique d'un point, Position mathématique d'un point

On va ci-après décrire en se référant notamment aux figures 1, 5, 9a, 9b, 9c et 9d les notions de projection mathématique 8, image mathématique 70, point mathématique, couleur mathématique d'un point, intensité mathématique d'un point, forme mathématique 41 d'un point, position mathématique 40 d'un point.

On va maintenant décrire en se référant à la figure 5 comment on réalise une image mathématique 70 par projection mathématique déterminée 8 d'au moins une scène 3 sur la surface mathématique 10.

Préalablement, on va décrire ce que l'on entend par projection mathématique déterminée 8.

Une projection mathématique déterminée 8 associe :
- à une scène 3 au moment de la capture d'une image 103,
- et aux caractéristiques utilisées 74,
   une image mathématique 70.

Une projection mathématique déterminée 8 est une transformation qui permet de déterminer les caractéristiques de chaque point de l'image mathématique 70 à partir de la scène 3 au moment de la capture d'image et des caractéristiques utilisées 74.

De manière préférentielle, la projection mathématique 8 est définie de la façon qui sera ci-après décrite.

On appelle position mathématique 40 du point la position du point d'observation 105 sur la surface mathématique 10.

On appelle forme mathématique 41 du point la forme géométrique, ponctuelle, du point d'observation 105.

On appelle couleur mathématique du point la couleur observée.

On appelle intensité mathématique du point l'intensité observée.

On appelle point mathématique l'association de la position mathématique 40, de la forme mathématique 41, de la couleur mathématique et de l'intensité mathématique pour le point d'observation 105 considéré. L'image mathématique 70 est constituée de l'ensemble desdits point mathématiques.

La projection mathématique 8 de la scène 3 est l'image mathématique 70.

### Projection réelle, Point réel, couleur réelle d'un point, intensité réelle d'un point, forme réelle d'un point, position réelle d'un point

On va ci-après décrire en se référant notamment aux figures 3, 5, 9a, 9b, 9c et 9d les notions de projection réelle 72, point réel, couleur réelle d'un point, intensité réelle d'un point, forme réelle 51 d'un point, position réelle 50 d'un point.

Lors d'une capture d'image, l'appareil de capture d'image 1 associé aux caractéristiques utilisées 74 produit une image 103 de la scène 3. La lumière provenant de la scène 3 selon une direction d'observation 106, traverse l'optique 100 et arrive sur la surface du capteur 110.

On obtient alors pour ladite direction d'observation ce que l'on appelle un point réel qui présente des différences par rapport au point mathématique.

En se référant aux figures 9a à 9d, on va maintenant décrire les différences entre le point réel et le point mathématique.

La forme réelle 51 associée à ladite direction d'observation 106 n'est pas un point sur la surface du capteur, mais a une forme de nuage dans l'espace à trois dimensions, qui a une intersection avec un ou plusieurs pixels 104. Ces différences ont en particulier pour origine le coma, l'aberration sphérique, l'astigmatisme, le regroupement en pixels 104, l'aberration chromatique, la profondeur de champ, la diffraction, les réflexions parasites , la courbure de champ de l'appareil de capture d'image 1. Elles donnent une impression de flou, de manque de piqué de l'image 103.

En outre, la position réelle 50 associée à ladite direction d'observation 106 présente une différence par rapport à la position mathématique 40 d'un point. Cette différence a en particulier pour origine la distorsion géométrique, qui donne une impression de déformation : par exemple, les murs verticaux paraissent courbes. Elle tient aussi au fait que le nombre de pixels 104 est limité et que par conséquent la position réelle 50 ne peut prendre qu'un nombre fini de valeurs.

En outre, l'intensité réelle associée à ladite direction d'observation 106 présente des différences par rapport à l'intensité mathématique d'un point. Ces différences ont en particulier pour origine le gamma et le vignettage : par exemple les bords de l'image 103 paraissent plus sombres. En outre du bruit peut s'ajouter au signal.

Enfin, la couleur réelle associée à ladite direction d'observation 106 présente des différences par rapport à la couleur mathématique d'un point. Ces différences ont en particulier pour origine le gamma et la dominante colorée. En outre du bruit peut s'ajouter au signal.

On appelle point réel l'association de la position réelle 50, de la forme réelle 51, de la couleur réelle et de l'intensité réelle pour la direction d'observation 106 considérée.

La projection réelle 72 de la scène 3 est constituée par l'ensemble des points réels.

### Modèle de transformation paramétrable, Paramètres, Image corrigée

On appelle modèle de transformation paramétrable 12 (ou de manière condensée, transformation paramétrable 12), une transformation mathématique permettant d'obtenir à partir d'une image 103, et de la valeur de paramètres une image corrigée 71. Lesdits paramètres pouvant notamment être calculés à partir des caractéristiques utilisées 74 comme il est indiqué ci-après.

Ladite transformation paramétrable 12 permet en particulier de déterminer pour chaque point réel de l'image 103, la position corrigée dudit point réel, la couleur corrigée dudit point réel, l'intensité corrigée dudit point réel, la forme corrigée dudit point réel, à partir de la valeur des paramètres, de la position réelle dudit point réel et des valeurs des pixels de l'image 103. La position corrigée peut être par exemple calculée à l'aide de polynômes de degré fixé en fonction de la position réelle, les coefficients des polynômes dépendant de la valeur des paramètres. La couleur corrigée et l'intensité corrigée peuvent être par exemple des sommes pondérées des valeurs des pixels, les coefficients dépendant de la valeur des paramètres et de la position réelle, ou encore des fonctions non linéaires des valeurs des pixels de l'image 103.

On appelle modèle de transformation paramétrable inverse 212 (ou de manière condensée, transformation paramétrable inverse 212), une transformation mathématique permettant d'obtenir à partir d'une image corrigée 71, et de la valeur de paramètres une image 103. Lesdits paramètres pouvant notamment être calculés à partir des caractéristiques utilisées 74 comme il est indiqué ci-après.

Ladite transformation paramétrable inverse 212 permet en particulier de déterminer, pour chaque point de l'image corrigée 71, le point réel de l'image 103 correspondant audit point de l'image corrigée 71 et notamment la position dudit point réel, la couleur dudit point réel, l'intensité dudit point réel, la forme dudit point réel, à partir de la valeur des paramètres et de l'image corrigée 71. La position du point réel peut être par exemple calculée à l'aide de polynômes de degré fixé en fonction de la position du point de l'image corrigée 71, les coefficients des polynômes dépendant de la valeur des paramètres.

Les paramètres peuvent inclure notamment : la focale de l'optique 100 de la configuration utilisée ou une valeur liée telle que la position d'un groupe de lentilles, la focalisation de l'optique 100 de la configuration utilisée ou une valeur liée telle que la position d'un groupe de lentilles, l'ouverture de l'optique 100 de la configuration utilisée ou une valeur liée telle que la position du diaphragme.

### Différence entre l'image mathématique et l'image corrigée

En se référant à la figure 5, on appelle différence 73 entre l'image mathématique 70 et l'image corrigée 71 pour une scène 3 donnée et des caractéristiques utilisées 74 données, une ou plusieurs valeurs déterminées à partir des nombres caractérisant la position, la couleur, l'intensité, la forme de tout ou partie des points corrigés et de tout ou partie des points mathématiques.

Par exemple, la différence 73 entre l'image mathématique 70 et l'image corrigée 71 pour une scène 3 donnée et des caractéristiques utilisées 74 données peut être déterminée de la façon suivante :
- On choisit des points caractéristiques qui peuvent être par exemple les points d'une grille orthogonale 80 de points disposés régulièrement comme présenté sur la figure 10.
- On calcule la différence 73 par exemple en effectuant la somme pour chaque point caractéristique des valeurs absolues des différences entre chaque nombre caractérisant la position corrigée, la couleur corrigée, l'intensité corrigée, la forme corrigée respectivement pour le point réel et pour le point mathématique. La fonction somme des valeurs absolues des différences peut être remplacée par une autre fonction comme la moyenne, la somme des carrés ou toute autre fonction permettant de combiner les nombres.

### Scène de référence

On appelle scène de référence 9 une scène 3 dont certaines caractéristiques sont connues. A titre d'exemple, la figure 4a présente une scène de référence 9 constituée d'une feuille de papier comportant des cercles remplis de noir et disposés régulièrement. La figure 4b présente une autre feuille de papier comportant les mêmes cercles auxquels s'ajoutent des traits et des surfaces colorées. Les cercles servent à mesurer la position réelle 50 d'un point, les traits la forme réelle 51 d'un point, les surfaces colorées la couleur réelle d'un point et l'intensité réelle d'un point. Cette scène de référence 9 peut être constituée d'un autre matériau que le papier.

### Image de référence

En se référant à la figure 12, on va maintenant définir la notion d'image de référence 11. On appelle image de référence 11, une image de la scène de référence 9 obtenue avec l'appareil de capture d'image 1.

### Image de synthèse, Classe d'images de synthèse

En se référant à la figure 12, on va maintenant définir la notion d'image de synthèse 207 et de classe d'images de synthèse 7. On appelle image de synthèse 207, une image mathématique 70 obtenue par projection mathématique 8 d'une scène de référence 9. On appelle classe d'images de synthèse 7, un ensemble d'images mathématiques 70 obtenues par projection mathématique 8 d'une ou plusieurs scènes de référence 9, ce pour un ou plusieurs jeux de caractéristiques utilisées 74. Dans le cas où il n'y a qu'une scène de référence 9 et qu'un jeu de caractéristiques utilisées 74, la classe d'images de synthèse 7 ne comprend qu'une image de synthèse 207.

### Image transformée

En se référant à la figure 12, on va maintenant définir la notion d'image transformée 13. On appelle image transformée 13, l'image corrigée obtenue par application d'un modèle de transformation paramétrable 12 à une image de référence 11.

### Image transformée proche d'une classe d'images de synthèse, Ecart

On va maintenant décrire, en se référant à la figure 12, la notion d'image transformée 13 proche d'une classe d'images de synthèse 7 et la notion d'écart 14.

On définit la différence entre une image transformée 13 et une classe d'images de synthèse 7 comme la plus faible différence entre ladite image transformée 13 et l'une quelconque des images de synthèse 207 de ladite classe d'images de synthèse 7.

Ensuite, on va décrire, en se référant sur la figure 12, un quatrième algorithme permettant de choisir parmi les modèles de transformation paramétrables 12 celui permettant de transformer chaque image de référence 11 en une image transformée 13 proche de la classe d'images de synthèse 7 de la scène de référence 9 correspondant à ladite image de référence 11, et ce dans différents cas de scènes de référence 9 et caractéristiques utilisées 74.
- Dans le cas d'une scène de référence 9 donnée associée à un jeu de caractéristiques utilisées 74 données, on choisit la transformation paramétrable 12 (et ses paramètres) qui permet de transformer l'image de référence 11 en l'image transformée 13 qui présente la plus faible différence avec la classe d'images de synthèse 7. La classe d'image de synthèse 7 et l'image transformée 13 sont alors dites proches. On appelle écart 14 ladite différence.
- Dans le cas d'un groupe de scènes de référence données associées à des jeux de caractéristiques utilisées 74 donnés, on choisit la transformation paramétrable 12 (et ses paramètres) en fonction des différences entre l'image transformée 13 de chaque scène de référence 9 et la classe d'images de synthèse 7 de chaque scène de référence 9 considérée. On choisit la transformation paramétrable 12 (et ses paramètres) qui permet de transformer les images de référence 11 en des images transformées 13 telle que la somme desdites différences soit la plus faible. La fonction somme peut être remplacée par une autre fonction comme le produit. La classe d'image de synthèse 7 et les images transformées 13 sont alors dites proches. On appelle écart 14 une valeur obtenue à partir desdites différences, par exemple en en calculant la moyenne.
- Dans le cas où certaines caractéristiques utilisées 74 sont inconnues, il est possible de les déterminer à partir de la capture de plusieurs images de référence 11 d'au moins une scène de référence 9. Dans ce cas, on détermine simultanément les caractéristiques inconnues et la transformation paramétrable 12 (et ses paramètres) qui permet de transformer les images de référence 11 en des images transformées 13 telles que la somme desdites différences soit la plus faible, notamment par calcul itératif ou par résolution d'équations concernant la somme desdites différences et/ou leur produit et/ou toute autre combinaison appropriée desdites différences. La classe d'image de synthèse 7 et les images transformées 13 sont alors dites proches. Les caractéristiques inconnues peuvent par exemple être les positions et les orientations relatives de la surface du capteur 110 et de chaque scène de référence 9 considérée. On appelle écart 14 une valeur obtenue à partir desdites différences, par exemple en en calculant la moyenne. Ensuite, on va décrire, en se référant sur la figure 12, un premier algorithme de calcul permettant de procéder à un choix :

- dans un ensemble de modèles de transformation paramétrables,
- dans un ensemble de modèles de transformation paramétrables inverses,
- dans un ensemble d'images de synthèse,
- dans un ensemble de scènes de référence et dans un ensemble d'images transformées.

Ce choix porte sur :
- une scène de référence 9, et/ou
- une image transformée 13, et/ou
- un modèle de transformation paramétrable 12 permettant de transformer l'image de référence 11, obtenue en capturant la scène de référence 9 au moyen de l'appareil de capture d'image 1, en l'image transformée 13, et/ou
- un modèle de transformation paramétrable inverse 212 permettant de transformer l'image transformée 13 en l'image de référence 11, et/ou
- une image de synthèse 207 obtenue à partir de la scène de référence 9 et/ou obtenue à partir de l'image de référence 11.

Le choix retenu est celui qui minimise la différence entre l'image transformée 13 et l'image de synthèse 207. L'image de synthèse 207 et l'image transformée 13 sont alors dites proches. On appelle écart 14 ladite différence.

De préférence, selon l'invention le premier algorithme de calcul permet de choisir dans un ensemble de projections mathématiques, une projection mathématique 8 permettant de réaliser l'image de synthèse 207 à partir de la scène de référence 9.

Ensuite, on va décrire, en se référant sur la figure 12, un second algorithme de calcul comportant les étapes de :
- choisir au moins une scène de référence 9,
- capturer au moins une image de référence 11 de chaque scène de référence 9 au moyen de l'appareil de capture d'image 1.

Ce second algorithme comporte en outre l'étape de choisir dans un ensemble de modèles de transformation paramétrables et dans un ensemble d'images de synthèse :
- un modèle de transformation paramétrable 12 permettant de transformer l'image de référence 11, en une image transformée 13, et/ou
- une image de synthèse 207 obtenue à partir de la scène de référence 9 et/ou obtenue à partir de l'image de référence 11,

Le choix retenu est celui qui minimise la différence entre l'image transformée 13 et l'image de synthèse 207. L'image de synthèse 207 et l'image transformée 13 sont alors dites proches. On appelle écart 14 ladite différence.

De préférence, selon l'invention le second algorithme de calcul permet de choisir dans un ensemble de projections mathématiques, une projection mathématique 8 permettant de réaliser l'image de synthèse 207 à partir de la scène de référence 9.

### Meilleure transformation

On appelle meilleure transformation :
- la transformation qui, parmi les modèles de transformation paramétrables 12, permet de transformer chaque image de référence 11 en une image transformée 13 proche de la classe d'images de synthèse 7 de la scène de référence 9 correspondant à ladite image de référence 11, et/ou,

- le modèles de transformation paramétrables 12 parmi les modèles de transformation paramétrables, telle que l'image transformée 13 soit proche de l'image de synthèse 207, et/ou
- le modèles de transformation paramétrables inverses 212 parmi les modèles de transformation paramétrables inverses, telle que l'image transformée 13 soit proche de l'image de synthèse 207.

### Calibrage

On appelle calibrage un procédé qui permet d'obtenir des données relatives aux caractéristiques intrinsèques de l'appareil de capture d'image 1, ce pour une ou plusieurs configurations utilisées constituées chacune d'une optique 100 associée à un appareil de capture d'image 1.

Cas 1 : dans le cas où il n'y a qu'une configuration, ledit procédé comprend les étapes suivantes :
- l'étape de monter ladite optique 100 sur ledit appareil de capture d'image 1,
- l'étape de choisir une ou plusieurs scènes de référence 9,
- l'étape de choisir plusieurs caractéristiques utilisées 74,
- l'étape de capturer des image desdites scènes de référence 9 pour lesdites caractéristiques utilisées,
- l'étape de calculer la meilleure transformation pour chaque groupe de scènes de référence 9 correspondant aux mêmes caractéristiques utilisées 74.

Cas 2 : dans le cas où on considère toutes les configurations correspondant à un appareil de capture d'image 1 donné et à toutes les optiques 100 d'un même type, ledit procédé comprend les étapes suivantes :
- l'étape de choisir une ou plusieurs scènes de référence 9,
- l'étape de choisir plusieurs caractéristiques utilisées 74,
- l'étape de calculer des images 103 à partir des caractéristiques utilisées 74 et notamment des formules de l'optique 100 de la configuration utilisée et des valeurs de paramètres, ce par exemple à l'aide d'un logiciel de calcul d'optique par tracé de rayons,
- l'étape de calculer la meilleure transformation pour chaque groupe de scènes de référence 9 correspondant aux mêmes caractéristiques utilisées.

Cas 3 : dans le cas où on considère toutes les configurations correspondant à une optique 100 donnée et à tous les appareils de capture d'image 1 d'un même type, ledit procédé comprend les étapes suivantes :
- l'étape de monter ladite optique 100 sur un appareil de capture d'image 1 du type considéré,
- l'étape de choisir une ou plusieurs scènes de référence 9,
- l'étape de choisir plusieurs caractéristiques utilisées 74,
- l'étape de capturer des images desdites scènes de référence 9 pour lesdites caractéristiques utilisées,
- l'étape de calculer la meilleure transformation pour chaque groupe de scènes de référence 9 correspondant aux mêmes caractéristiques utilisées.

Le calibrage peut être effectué, de manière préférentielle, par le constructeur de l'appareil de capture d'image 1, ce pour chaque appareil et configuration dans le cas 1. Cette méthode est plus précise mais plus contraignante et bien adaptée dans le cas ou l'optique 100 n'est pas interchangeable.

Le calibrage peut alternativement être effectué par le constructeur de l'appareil de capture d'image 1, ce pour chaque type et configuration d'appareil dans le cas 2. Cette méthode est moins précise mais plus simple.

Le calibrage peut alternativement être effectué par le constructeur de l'appareil de capture d'image 1 ou un tiers, ce pour chaque optique 100 et type d'appareil dans la cas 3. Cette méthode est un compromis permettant d'utiliser une optique 100 sur tous les appareils de capture d'image 1 d'un type sans refaire le calibrage pour chaque combinaison d'appareil de capture d'image 1 et d'optique 100. Dans le cas d'un appareil de capture d'image à optique non interchangeable, la méthode permet de ne faire le calibrage qu'une fois pour un type d'appareil donné.

Le calibrage peut alternativement être effectué par le revendeur ou installateur de l'appareil, ce pour chaque appareil de capture d'image 1 et configuration dans le cas 1.

Le calibrage peut alternativement être effectué par le revendeur ou installateur de l'appareil, ce pour chaque optique 100 et type d'appareil dans le cas 3.

Le calibrage peut alternativement être effectué par l'utilisateur de l'appareil, ce pour chaque appareil et configuration dans le cas 1.

Le calibrage peut alternativement être effectué par l'utilisateur de l'appareil, ce pour chaque optique 100 et type d'appareil dans le cas 3.

### Conception d'optique numérique

On appelle conception d'optique numérique, un procédé pour diminuer le coût de l'optique 100, consistant à :
- concevoir ou choisir dans un catalogue une optique 100 ayant des défauts, notamment de positionnement des points réels,
- diminuer le nombre de lentilles, et/ou
- simplifier la forme des lentilles, et/ou
- utiliser des matériaux, traitements ou procédés de fabrication moins coûteux.

Ledit procédé comprend les étapes suivantes :
- l'étape de choisir une différence (au sens ci-dessus défini) acceptable,
- l'étape de choisir une ou plusieurs scènes de référence 9,
- l'étape de choisir plusieurs caractéristiques utilisées 74.

Ledit procédé comprend en outre l'itération des étapes suivantes :
- l'étape de choisir une formule optique comprenant notamment la forme, le matériau et la disposition des lentilles,
- l'étape de calculer des images 103 à partir des caractéristiques utilisées 74 et notamment des formules de l'optique 100 de la configuration utilisée, en mettant en oeuvre, par exemple, un logiciel de calcul d'optique par tracé de rayons, ou en effectuant des mesures sur un prototype,
- l'étape de calculer la meilleure transformation pour chaque groupe de scènes de référence 9 correspondant aux mêmes caractéristiques utilisées 74,
- l'étape de vérifier si la différence est acceptable, jusqu'à ce que la différence soit acceptable.

### Informations formatées

On appelle informations formatées 15 associées à l'image 103 ou informations formatées 15, tout ou partie des données suivantes :
- des données relatives aux caractéristiques techniques intrinsèques de l'appareil de capture d'image 1, notamment les caractéristiques de distorsion, et/ou
- des données relatives aux caractéristiques techniques de l'appareil de capture d'image 1 au moment de la capture d'image, notamment le temps de pose, et/ou
- des données relatives aux préférences dudit utilisateur, notamment la température de couleurs, et/ou
- des données relatives aux écarts 14.

### Base de données de caractéristiques

On appelle base de données de caractéristiques 22, une base de données comprenant, pour un ou plusieurs appareils de capture d'image 1 et pour une ou plusieurs images 103, des informations formatées 15.

Ladite base de donnée de caractéristiques 22 peut être stockée de manière centralisée ou répartie, et peut être notamment :
- intégrée dans l'appareil de capture d'image 1,
- intégrée dans l'optique 100,
- intégrée sur un dispositif de stockage amovible,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

### Champs

On va maintenant définir la notion de champs 91 en se référant à la figure 8. Les informations formatées 15 associées à l'image 103 peuvent être enregistrées sous plusieurs formes et structurées en une ou plusieurs tables mais elles correspondent logiquement à tout ou partie des champs 91, comprenant :
(a) la distance focale,
(b) la profondeur de champ,
(c) les défauts géométriques.

Lesdits défauts géométriques comprennent les défauts de géométrie de l'image 103 caractérisés par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la position corrigée d'un point de l'image 103.

Lesdits défauts géométriques comprennent en outre le vignetage caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer l'intensité corrigée d'un point de l'image 103.

Lesdits défauts géométriques comprennent en outre la dominante colorée caractérisée par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la couleur corrigée d'un point de l'image 103.

Lesdits champs 91 comprennent en outre (d) le piqué de l'image 103.

Ledit piqué comprend le flou de résolution de l'image 103 caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103. Le flou couvre en particulier le coma, l'aberration sphérique, l'astigmatisme, le regroupement en pixels 104, l'aberration chromatique, la profondeur de champ, la diffraction, les réflexions parasites, la courbure de champ.

Ledit piqué comprend en outre le flou de profondeur de champ, notamment les aberrations sphériques, le coma, l'astigmatisme. Ledit flou dépend de la distance des points de la scène 3 par rapport à l'appareil de capture d'image 1 et est caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103.

Lesdits champs 91 comprennent en outre (e) des paramètres de la méthode de quantification. Lesdits paramètres dépendent de la géométrie et la physique du capteur 101, de l'architecture de l'électronique 102 et d'éventuels logiciels de traitement.

Lesdits paramètres comprennent une fonction représentant les variations de l'intensité d'un pixel 104 en fonction de la longueur d'onde et du flux lumineux provenant de ladite scène 3. Ladite fonction comprend notamment les information de gamma.

Lesdits paramètres comprennent en outre :
- la géométrie dudit capteur 101, notamment la forme, la position relative et le nombre des éléments sensibles dudit capteur 101,
- une fonction représentant la distribution spatiale et temporelle du bruit de l'appareil de capture d'image 1,
- une valeur représentant le temps de pose de la capture d'image.

Lesdits champs 91 comprennent en outre (f) des paramètres des traitements numériques effectués par l'appareil de capture d'image 1, notamment le zoom numérique, la compression. Ces paramètres dépendent du logiciel de traitement de l'appareil de capture d'image 1 et des réglages de l'utilisateur.

Lesdits champs 91 comprennent en outre :
(g) des paramètres représentant les préférences de l'utilisateur, notamment en ce qui concerne le degré de flou, la résolution de l'image 103.
(h) les écarts 14.

### Calcul des informations formatées

Les informations formatées 15 peuvent être calculées et enregistrées dans la base de données 22 en plusieurs étapes.
a) Une étape à l'issue de la conception de l'appareil de capture d'image 1.
   Cette étape permet d'obtenir des caractéristiques techniques intrinsèques de l'appareil de capture d'image 1, et notamment :
   - la distribution spatiale et temporelle du bruit généré par l'électronique 102,
   - la loi de conversion flux lumineux en valeur de pixel,
   - la géométrie du capteur 101.
b) Une étape à l'issue du calibrage ou conception d'optique numérique.
   Cette étape permet d'obtenir d'autres caractéristiques techniques intrinsèques de l'appareil de capture d'image 1, et notamment, pour un certain nombre de valeurs de caractéristiques utilisées, la meilleure transformation associée et l'écart 14 associé.
c) Une étape de choix des préférences de l'utilisateur à l'aide de boutons, menus ou support amovible ou connexion à un autre dispositif.
d) Une étape de capture d'image.

Cette étape (d) permet d'obtenir des caractéristiques techniques de l'appareil de capture d'image 1 au moment de la capture d'image, et notamment le temps de pose, déterminé par les réglages manuels ou automatiques effectués.

L'étape (d) permet en outre d'obtenir la distance focale. La distance focale est calculée à partir :
- d'une mesure de la position du groupe de lentilles de focale variable de l'optique 100 de la configuration utilisée, ou
- d'une consigne donnée au moteur de positionnement, ou
- d'une donnée constructeur si la focale est fixe.

Ladite distance focale peut enfin être déterminée par l'analyse du contenu de l'image 103.

L'étape (d) permet en outre d'obtenir la profondeur de champ. La profondeur de champ est calculée à partir :
- d'une mesure de la position du groupe de lentilles de focalisation de l'optique 100 de la configuration utilisée, ou
- d'une consigne donnée au moteur de positionnement, ou
- d'une donnée constructeur si la profondeur de champ est fixe.

L'étape (d) permet en outre d'obtenir les défauts de géométrie et de piqué. Les défauts de géométrie et de piqué correspondent à une transformation calculée à l'aide d'une combinaison des transformations de la base de données de caractéristiques 22 obtenues à l'issue de l'étape (b). Cette combinaison est choisie pour représenter les valeurs de paramètres correspondant aux caractéristiques utilisées 74, notamment la distance focale.

L'étape (d) permet en outre d'obtenir les paramètres de traitement numériques effectués par l'appareil de capture d'image 1. Ces paramètres sont déterminés par les réglages manuels ou automatiques effectués.

Le calcul des informations formatées 15 selon les étapes (a) à (d) peut être réalisé par :
- un dispositif ou logiciel intégré à l'appareil de capture d'image 1, et/ou
- un logiciel pilote dans un PC ou autre ordinateur, et/ou
- un logiciel dans un PC ou autre ordinateur, et/ou
- une combinaison des trois.

Les transformations ci-dessus mentionnées à l'étape (b) et à l'étape (d) peuvent être stockées sous la forme :
- d'une formule mathématique générale,
- d'une formule mathématique pour chaque point,
- d'une formule mathématique pour certains points caractéristiques.

Les formules mathématiques peuvent être décrites par :
- une liste de coefficients,
- une liste de coefficients et de coordonnées.

Ces différentes méthodes permettent de faire un compromis entre la taille de la mémoire disponible pour stocker les formules et la puissance de calcul disponible pour calculer les images corrigées 71.

En outre, afin de retrouver les données, des identifiants associés aux données sont enregistrés dans la base de données 22. Ces identifiants comprennent notamment :
- un identifiant du type et de la référence de l'appareil de capture d'image 1,
- un identifiant du type et de la référence de l'optique 100 si elle est amovible,
- un identifiant du type et de la référence de tout autre elément amovible ayant un lien avec les informations stockées,
- un identifiant de l'image 103,
- un identifiant de l'information formatée 15.

### Image complétée

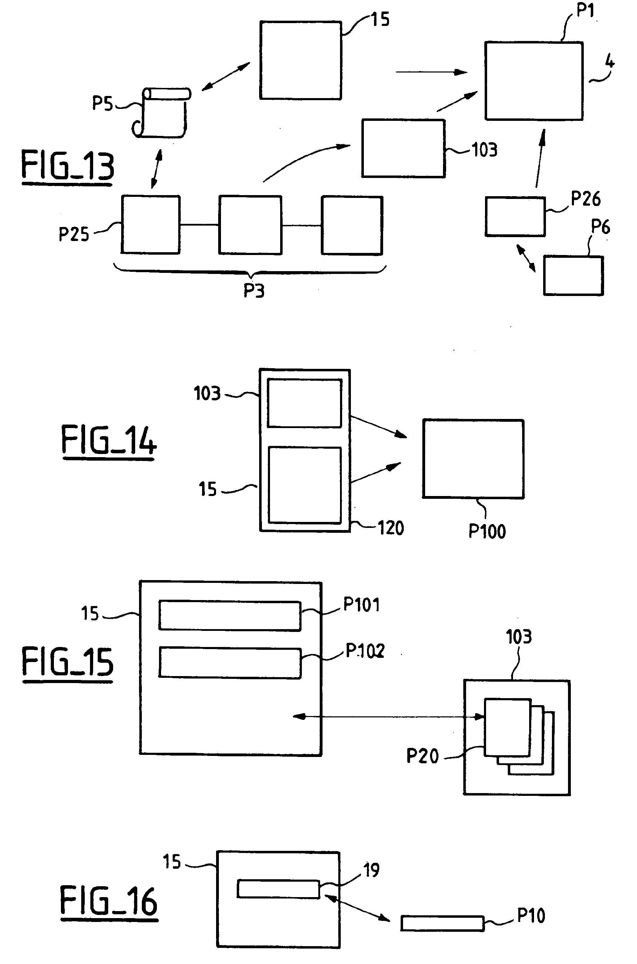

Comme décrit par la figure 11, on appelle image complétée 120, l'image 103 associée aux informations formatées 15. Cette image complétée 120 peut prendre la forme, de manière préférentielle, d'un fichier P100, comme décrit par la figure 14. L'image complétée 120 peut également être répartie dans plusieurs fichiers.

L'image complétée 120 peut être calculée par l'appareil de capture d'image 1. Elle peut être également calculée par un dispositif de calcul externe, par exemple un ordinateur.

### Logiciel de traitement d'image

On appelle logiciel de traitement d'image 4, un logiciel qui prend en entrée une ou plusieurs images complétées 120 et qui effectue des traitements sur ces images. Ces traitements peuvent comprendre, notamment :
- de calculer d'une image corrigée 71,
- d'effectuer des mesures dans le monde réel,
- de combiner plusieurs images,
- d'améliorer la fidélité des images par rapport au monde réel,
- d'améliorer la qualité subjective des images,
- de détecter des objets ou personnes 107 dans une scène 3,
- d'ajouter des objets ou personnes 107 dans une scène 3,
- de remplacer ou modifier des objets ou personnes 107 dans une scène 3,
- de retirer les ombres d'une scène 3,
- d'ajouter des ombres dans une scène 3,
- de rechercher des objets dans une base d'images. Ledit logiciel de traitement d'image peut être :
- intégré à l'appareil de capture d'image 1,
- exécuté sur des moyens de calcul 17 reliés à l'appareil de capture d'image 1 par des moyens de transmission 18.

### Optique numérique

On appelle optique numérique, la combinaison d'un appareil de capture d'image 1, d'une base de données de caractéristiques 22 et d'un moyen de calcul 17 permettant :
- la capture d'image d'une image 103,
- le calcul de l'image complétée,
- le calcul de l'image corrigée 71.

De manière préférentielle, l'utilisateur obtient directement l'image corrigée 71. S'il le souhaite, l'utilisateur peut demander la suppression de la correction automatique.

La base de données de caractéristiques 22 peut être :
- intégrée dans l'appareil de capture d'image 1,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

Le moyen de calcul 17 peut être :
- intégré sur un composant avec le capteur 101,
- intégré sur un composant avec une partie de l'électronique 102,
- intégré dans l'appareil de capture d'image 1,
- intégré dans un PC ou autre ordinateur relié aux autres éléments pendant la capture d'image,
- intégré dans un PC ou autre ordinateur relié aux autres éléments après la capture d'image,
- intégré dans un PC ou autre ordinateur capable de lire un support de stockage commun avec l'appareil de capture d'image 1,
- intégré dans un serveur distant relié à un PC ou autre ordinateur lui même relié aux autres éléments de la capture d'image.

### Traitement de la chaîne complète

Dans les précédents paragraphes, on a essentiellement précisé les concepts et la description du procédé et du système selon l'invention pour fournir à des logiciels de traitement d'images 4 des informations formatées 15 liées aux caractéristiques des appareils de capture d'image 1.

Dans les paragraphes qui suivent, on va élargir la définition des concepts et compléter la description du procédé et du système selon l'invention pour fournir à des logiciels de traitement d'images 4 des informations formatées 15 liées aux caractéristiques des moyens de restitution d'image 19. On aura ainsi exposé le traitement d'une chaîne complète.

Le traitement de la chaîne complète permet :
- d'améliorer la qualité de l'image 103 d'un bout à l'autre de la chaîne, pour obtenir une image restituée 191 corrigeant les défauts de l'appareil de capture d'image 1 et du moyen de restitution d'image 19, et/ou
- d'utiliser des optiques de moindre qualité et de moindre coût dans un projecteur vidéo en combinaison avec un logiciel d'amélioration de la qualité des images.

### Définitions liées aux moyens de restitution d'image

En s'appuyant sur les figures 2, 17 et 6, on va maintenant décrire la prise en compte dans les informations formatées 15 des caractéristiques d'un moyen de restitution d'images 19 tel qu'une imprimante, un écran de visualisation ou un projecteur.

Les compléments ou modifications à apporter aux définitions dans le cas d'un moyen de restitution d'image 19 peuvent être extrapolées mutatis mutandis par un homme de métier à partir des définitions fournies dans le cas d'un appareil de capture d'image 1. Toutefois, afin d'illustrer cette méthode, on va maintenant décrire en se référant notamment à la figure 6 et à la figure 17 les principaux compléments ou modifications.

On désigne par caractéristiques de restitution utilisées 95 les caractéristiques intrinsèques des moyens de restitution d'image 19, les caractéristiques du moyen de restitution d'image 19 au moment de la restitution d'image, et les préférences de l'utilisateur au moment de la restitution des images. Notamment dans le cas d'un projecteur, les caractéristiques de restitution utilisées 95 comprennent la forme et la position de l'écran utilisé.

On désigne par modèle de transformation paramétrable de restitution 97 (ou de manière condensée, transformation paramétrable de restitution 97),une transformation mathématique similaire au modèle de transformation paramétrable 12. On désigne par modèle de transformation paramétrable de restitution inverse 297 (ou de manière condensée, transformation paramétrable de restitution inverse 297),une transformation mathématique similaire au modèle de transformation paramétrable inverse 212.

On désigne par image corrigée de restitution 94 l'image obtenue par application de la transformation paramétrable de restitution 97 à l'image 103.

On désigne par projection mathématique de restitution 96 une projection mathématique qui associe à une image corrigée de restitution 94, une image mathématique de restitution 92 sur la surface mathématique de restitution géométriquement associée à la surface du support de restitution 190. Les points mathématiques de restitution de la surface mathématique de restitution ont une forme, position, couleur et intensité calculées à partir de l'image corrigée de restitution 94.

On désigne par projection réelle de restitution 90 une projection associant à une image 103 une image restituée 191. Les valeurs de pixels de l'image 103 sont converties par l'électronique des moyens de restitution 19 en un signal qui pilote le modulateur des moyens de restitution 19. On obtient des points réels de restitution sur le support de restitution 190. Lesdits points réels de restitution sont dotés d'une forme, couleur, intensité et position. Le phénomène de regroupement en pixels 104 précédemment décrit dans le cas d'un appareil de capture d'image 1 ne se produit pas dans le cas d'un moyen de restitution d'image. En revanche, un phénomène inverse se produit qui fait notamment apparaître des droites comme des marches d'escalier.

On désigne par différence de restitution 93 la différence entre l'image restituée 191 et l'image mathématique de restitution 92. Cette différence de restitution 93 est obtenue mutatis mutandis comme la différence 73.

On désigne par référence de restitution 209 une image 103 dont les valeurs des pixels 104 sont connues. On désigne par référence restituée 211, l'image restituée 191 obtenue par la projection mathématique de restitution 90 de la référence de restitution 209. On désigne par image de référence corrigée de restitution 213, l'image corrigée de restitution 94 correspondant à la référence de restitution 209, pour le modèle de transformation paramétrable de restitution 97 et/ou pour le modèle de transformation paramétrable de restitution inverse 297. On désigne par image de synthèse de restitution 307 l'image mathématique de restitution 92 obtenue par la projection mathématique de restitution 96 de l'image de référence corrigée de restitution 213.

On désigne par meilleure transformation de restitution :
- pour une référence de restitution 209 et des caractéristiques utilisées de restitution 95, celle qui permet de transformer l'image 103 en une image corrigée de restitution 94 telle que sa projection mathématique de restitution 92, présente la plus faible différence de restitution 93 avec l'image restituée 191, et/ou
- la transformation paramétrable de restitution 97 parmi les modèles de transformation paramétrables de restitution , telle que référence restituée 211 présente la plus faible différence de restitution 93 avec l'image de synthèse de restitution 307, et/ou
- la transformation paramétrable de restitution inverse 297 parmi les modèles de transformation paramétrables inverses, telle que référence restituée 211 présente la plus faible différence de restitution 93 avec l'image de synthèse de restitution 307.

La référence restituée 211 et l'image de synthèse de restitution 307 sont alors dites proches.

Les procédés de calibrage de restitution et de conception d'optique numérique de restitution sont comparables aux procédés de calibrage et de conception d'optique numérique dans le cas d'un appareil de capture d'image 1. Certaines étapes comportent cependant des différences, et notamment les étapes suivantes :
- l'étape de choisir une référence de restitution 209;
- l'étape d'effectuer la restitution de ladite référence de restitution ;
- l'étape de calculer la meilleure transformation de restitution.

De préférence, selon l'invention, le procédé comprend un sixième algorithme de calcul des informations formatées 15. Ce sixième algorithme permet d'effectuer un choix :
- dans un ensemble de modèles de transformation paramétrables de restitution,
- dans un ensemble de modèles de transformation paramétrables de restitution inverses,
- dans un ensemble de projections mathématiques de restitution,
- dans un ensemble de références de restitution et dans un ensemble d'images de référence corrigées de restitution.

Le choix effectué par ce sixième algorithme porte sur :
- une référence de restitution 209, et/ou
- une image de référence corrigée de restitution 213, et/ou
- un modèle de transformation paramétrable de restitution 97 permettant de transformer la référence de restitution 209 en l'image de référence corrigée de restitution 213, et/ou
- un modèle de transformation paramétrable de restitution inverse 297 permettant de transformer l'image de référence corrigée de restitution 213 en la référence de restitution 209, et/ou
- une projection mathématique de restitution 96 permettant de réaliser une image de synthèse de restitution 307 à partir de l'image de référence corrigée de restitution 213.

Le choix est effectué par ce sixième algorithme de telle sorte que l'image de synthèse de restitution 307 soit proche de la référence restituée 211 obtenue par restitution de la référence de restitution 209, au moyen du moyen de restitution d'images 19. La référence restituée 211 présente un écart de restitution 214 avec l'image de synthèse de restitution 307.

Selon une variante de réalisation de l'invention, le procédé comprend un septième algorithme de calcul des informations formatées. Ce septième algorithme comporte les étapes de :
- choisir au moins une référence de restitution 209,
- restituer la référence de restitution 209, au moyen du moyen de restitution d'images 19, en une référence restituée 211.

Ce septième algorithme permet également de choisir dans un ensemble de modèles de transformation paramétrables de restitution et dans un ensemble de projections mathématiques de restitution :
- un modèle de transformation paramétrable de restitution 97 permettant de transformer la référence de restitution 209 en une image de référence corrigée de restitution 213, et
- une projection mathématique de restitution 96 permettant de réaliser une image de synthèse de restitution 307 à partir de l'image de référence corrigée de restitution 213.

Le choix est effectué par le septième algorithme de telle sorte que l'image de synthèse de restitution 307 soit proche de la référence restituée 211. La référence restituée présente un écart de restitution 214 avec l'image de synthèse de restitution 307. Le modèle de transformation paramétrable de restitution inverse 297 permet de transformer l'image de référence corrigée de restitution 213 en la référence de restitution 209.

Selon une autre variante de réalisation l'invention, le procédé comprend un huitième algorithme de calcul des informations formatées. Ce huitième algorithme comporte l'étape de choisir une image de référence corrigée de restitution 213. Ce huitième algorithme comporte en outre l'étape d'effectuer un choix dans un ensemble de modèles de transformation paramétrables de restitution, dans un ensemble de projections mathématiques de restitution, dans un ensemble de références de restitution. Ce choix porte sur :
- une référence de restitution 209, et/ou
- un modèle de transformation paramétrable de restitution 97 permettant de transformer la référence de restitution 209 en l'image de référence corrigée de restitution 213, et/ou

- un modèle de transformation paramétrable de restitution inverse 297 permettant de transformer l'image de référence corrigée de restitution 213 en la référence de restitution 209, et/ou
- une projection mathématique de restitution 96 permettant de réaliser une image de synthèse de restitution 307 à partir de l'image de référence corrigée de restitution 213.

Le huitième algorithme effectue ce choix de telle sorte que l'image de synthèse de restitution 307 soit proche de la référence restituée 211 obtenue par restitution de la référence de restitution 209, au moyen du moyen de restitution d'images 19. La référence restituée 211 présente un écart de restitution avec l'image de synthèse de restitution 307.

De préférence, selon l'invention, le procédé comprend un neuvième algorithme de calcul des écarts de restitution 214. Ce neuvième algorithme comporte les étapes de :
- calculer les écarts de restitution 214 entre la référence restituée 211 et l'image de synthèse de restitution 307,
- associer les écarts de restitution 214 aux informations formatées 15.

Il résulte de la combinaison des traits techniques qu'il est possible de vérifier automatiquement, par exemple pendant la fabrication de l'appareil que le procédé a produit des informations formatées dans des tolérances acceptables.

Les informations formatées 15 liées à un appareil de capture d'image 1 et celles liées à un moyen de restitution d'image 19 peuvent être mises bout à bout pour une même image.

Il est également possible de combiner les informations formatées 15 relatives à chacun des appareils, pour obtenir les informations formatées 15 relative à la chaîne d'appareils, par exemple par addition d'un champ de vecteur, dans le cas de la distorsion géométrique.

On a précédemment décrit la notion de champ dans le cas d'un appareil de capture d'image 1. Cette notion s'applique également mutatis mutandis dans le cas de moyens de restitution d'image 19. Toutefois, aux paramètres de la méthode de quantification on substitue les paramètres de la méthode de reconstitution du signal, à savoir : la géométrie du support de restitution 190 et sa position, une fonction représentant la distribution spatiale et temporelle du bruit du moyen de restitution d'images 19.

Dans une variante de réalisation, selon l'invention, le moyen de restitution 19 est associé à un appareil de capture d'image 1 pour restituer, sous une forme numérique, la référence restituée 211 à partir de la référence de restitution 209. Le procédé est tel que pour produire les informations formatées 15 liées aux défauts P5 du moyen de restitution 19, on utilise les informations formatées 15 relatives à l'appareil de capture d'image 1 associé au moyen de restitution, par exemple pour corriger les défauts de l'appareil de capture d'image 1 de sorte que la référence restituée 211 ne comporte que les défauts P5 du moyen de restitution 19.

### Généralisation des concepts

Les traits techniques composant l'invention et figurant dans les revendications ont été définis, décrits, illustrés en se référant essentiellement à des appareils de capture d'image de type numérique, c'est-à-dire produisant des images numériques. On conçoit aisément que les mêmes traits techniques s'appliquent dans le cas d'appareils de capture d'image qui seraient la combinaison d'un appareil argentique (un appareil photographique ou cinématographique utilisant des pellicules sensibles argentiques, négatives ou inversibles) et d'un scanner produisant une image numérique à partir des pellicules sensibles développées. Certes, il y a lieu dans ce cas d'adapter au moins certaines des définitions utilisées. Ces

adaptations sont à la portée de l'homme de métier. Afin de mettre en évidence le caractère évident de telles adaptations, on se bornera à mentionner que les notions de pixel et de valeur de pixel illustrées en se référant à la figure 3 doivent, dans le cas de la combinaison d'un appareil argentique et d'un scanner, s'appliquer à une zone élémentaire de la surface de la pellicule après que celle-ci ait été numérisée au moyen du scanner. De telles transpositions des définitions vont de soi et peuvent être étendues à la notion de configuration utilisée. A la liste des sous-ensembles amovibles de l'appareil de capture d'image 1 composant la configuration utilisée, on peut par exemple ajouter le type de pellicule photographique effectivement utilisée dans l'appareil argentique.

D'autres caractéristiques et avantages de l'invention apparaîtront à la lecture des définitions et exemples indicatifs et non limitatifs, ci-après explicités en se référant aux figures 1 à 17.

### Appareil

En se référant notamment aux figures 2, 3 et 13, on va décrire la notion d'appareil P25. Au sens de l'invention, un appareil P25 peut être notamment:
- un appareil de capture d'image 1, comme par exemple un appareil photo jetable, un appareil photo numérique, un appareil reflex, un scanner, un fax, un endoscope, un caméscope, une caméra de surveillance, un jouet, une caméra intégrée ou reliée à un téléphone, à un assistant personnel ou à un ordinateur, une caméra thermique, un appareil d'échographie,
- un appareil de restitution d'image 19 ou moyen de restitution d'image 19 comme par exemple un écran, un projecteur, un téléviseur, des lunettes de réalité virtuelle ou une imprimante,
- un appareil y compris son installation, par exemple un projecteur, un écran et la façon dont ils sont positionnés,
- le positionnement d'un observateur par rapport à un appareil de restitution d'image 19, qui introduit notamment des erreurs de parallaxe,
- un être humain ou observateur ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil P25,

Un appareil P25 plus complexe comme un scanner/fax/imprimante, un Minilab d'impression photo, un appareil de vidéo-conférence peut être considéré comme un appareil P25 ou plusieurs appareils P25.

### Chaîne d'appareils

En se référant notamment à la figure 13, on va maintenant décrire la notion de chaîne d'appareils P3. On appelle chaîne d'appareils P3 un ensemble d'appareils P25. La notion de chaîne d'appareils P3 peut en outre inclure une notion d'ordre.

Les exemples suivants constituent des chaînes d'appareils P3:
- un seul appareil P25,
- un appareil de capture d'image 1 et un appareil de restitution d'image 19,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image 19,
- une combinaison des exemples précédents,
- un autre ensemble d'appareils P25.

### Défaut

En se référant notamment à la figure 13, on va maintenant décrire la notion de défaut P5. On appelle défaut P5 de l'appareil P25, un défaut lié aux caractéristiques de l'optique et/ou du capteur et/ou de l'électronique et/ou du logiciel intégré à un appareil P25 ; des exemples de défauts P5 sont par exemple les défauts de géométrie, les défauts de piqué, les défauts de colorimétrie, les défauts géométriques de distorsion, les défauts géométriques d'aberration chromatique, les défauts géométriques de vignetage, les défauts de contraste, les défauts de colorimétrie, notamment le rendu des couleurs et la dominante colorée, les défauts d'uniformité du flash, le bruit du capteur, le grain, les défauts d'astigmatisme, les défauts d'aberration sphérique.

### Image

En se référant notamment aux figures 2, 5, 6 et 13, on va maintenant décrire la notion d'image 103. On appelle image 103 une image numérique capturée ou modifiée ou restituée par un appareil P25. L'image 103 peut provenir d'un appareil P25 de la chaîne d'appareils P3. L'image 103 peut être destinée à un appareil P25 de la chaîne d'appareils P3. De manière plus générale l'image 103 peut provenir et/ou être destinée à la chaîne d'appareils P3. Dans le cas d'images animées, par exemple vidéo, constituées d'une séquence dans le temps d'images fixes, on appelle image 103 : une image fixe de la séquence d'images.

### Informations formatées

En se référant notamment aux figures 7, 8 et 10, 13, on va maintenant décrire la notion d'informations formatées 15. On appelle informations formatées 15 des données liées aux défauts P5 ou caractérisant les défauts P5 d'un ou plusieurs appareils P25 de la chaîne d'appareils P3 et permettant à des moyens de traitement d'images P1 de modifier la qualité des images 103 en tenant compte des défauts P5 de l'appareil P25.

Pour produire les informations formatées 15, on peut utiliser divers procédés et systèmes basés sur des mesures, et/ou des simulations, et/ou des calibrages, comme par exemple le procédé de calibrage décrit précédemment.

Pour diffuser les informations formatées 15, on peut utiliser un fichier P100 contenant l'image complétée 120, par exemple un appareil de capture d'image 1 comme un appareil photo numérique peut produire des fichiers contenant l'image 103, les informations formatées 15 recopiées depuis une mémoire interne à l'appareil et des données au format Exif contenant les réglages utilisés.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des nformations formatées liées aux distorsions géométriques (WO 03007237)." Dans cette demande, il est décrit un procédé pour produire des informations formatées 15 liées aux appareils P25 d'une chaîne d'appareils P3. La chaîne d'appareils P3 comprend notamment au moins un appareil de capture d'image 1 et/ou au moins un appareil de restitution d'image 19. Le procédé comprend l'étape de produire des informations formatées 15 liées aux distorsions géométriques d'au moins un appareil P25 de la chaîne.

De préférence, l'appareil P25 permettant de capturer ou restituer une image sur un support. L'appareil P25 comporte au moins une caractéristique fixe et/ou une caractéristique variable selon l'image. La caractéristique fixe et/ou caractéristique variable est susceptible d'être associée à une ou plusieurs valeurs de caractéristiques, notamment la focale et/ou la mise au point et leurs valeurs de caractéristiques associées. Le procédé comprend l'étape de produire des informations formatées mesurées liées aux distorsions géométriques de l'appareil à partir d'un champ mesuré. Les informations formatées 15 peuvent comprendre les informations formatées mesurées.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des informations formatées liées aux défauts d'au moins un appareil d'une chaîne, notamment au flou" (WO 03007242). Dans cette demande, il est décrit un procédé pour produire des informations formatées 15 liées aux appareils P25 d'une chaîne d'appareils P3. La chaîne d'appareils P3 comprend notamment au moins un appareil de capture d'image et/ou au moins un appareil de restitution d'image 19. Le procédé comprend l'étape de produire des informations formatées 15 liées aux défauts P5 d'au moins un appareil P25 de la chaîne. De préférence, l'appareil P25 permettant de capturer ou restituer une image comporte au moins une caractéristique fixe et/ou une caractéristique variable selon l'image (I). Les caractéristiques fixe et/ou variables sont susceptibles d'être associées à une ou plusieurs valeurs de caractéristiques, notamment la focale et/ou la mise au point et leurs valeurs de caractéristiques associées. Le procédé comprend l'étape de produire des informations formatées mesurées liées aux défauts P5 de l'appareil P25 à partir d'un champ mesuré. Les informations formatées 15 peuvent comprendre les informations formatées mesurées.

Pour produire les informations formatées 15, on peut par exemple utiliser le procédé et le système décrits dans la demande de brevet international déposée le même jour que la présente demande au nom de la société Vision IQ et sous le titre : "Procédé et système pour réduire la fréquence des mises à jour de moyens de traitement d'images (WO 03007236). Dans cette demande, il est décrit un procédé pour réduire la fréquence des mises à jour de moyens de traitement d'images P1, notamment un logiciel et/ou un composant. Les moyens de traitement d'images permettant de modifier la qualité des images numériques provenant ou destinées à une chaîne d'appareils P3. La chaîne d'appareil P3 comporte au moins un appareil de capture d'image et/ou au moins un appareil de restitution d'image 19. Les moyens de traitement d'image P1 mettent en oeuvre des informations formatées 15 liées aux défauts P5 d'au moins un appareil de la chaîne d'appareils P5. Les informations formatées 15 dépendent d'au moins une variable. Les informations formatées 15 permettant d'établir une correspondance entre une partie des variables et des identifiants. Les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image P1. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Pour rechercher les informations formatées 15, on peut par exemple utiliser le procédé et le système décrits dans la demande de brevet international déposée le même jour que la présente demande au nom de la société Vision IQ et sous le titre : "Procédé et système pour modifier la qualité d'au moins une image provenant ou destinée à une chaîne d'appareils (WO 03007240). Dans cette demande, il est décrit un procédé pour modifier la qualité d'au moins une image 103 provenant ou destinée à une chaîne d'appareils déterminée. La chaîne d'appareils déterminée comprend au moins un appareil de capture d'image et/ou au moins un appareil de restitution d'image 19. Les appareils de capture d'image et/ou les appareils de restitution d'image, progressivement mis sur le marché par des acteurs économiques distincts, appartiennent à un ensemble indéterminé d'appareils. Les appareils P25 de l'ensemble d'appareils présentent des défauts P5 qui peuvent être caractérisés par des informations formatées 15. Le procédé comprend, pour l'image concernée, les étapes suivantes :
- l'étape de répertorier des sources d'informations formatées relatives aux appareils P25 de l'ensemble d'appareils,
- l'étape de rechercher de manière automatique, parmi les informations formatées 15 ainsi répertoriées, des informations formatées spécifiques relatives à la chaîne d'appareils déterminée,
- l'étape de modifier de manière automatique l'image au moyen de logiciels de traitement d'images et/ou de composants de traitement d'images en tenant compte des informations formatées spécifiques ainsi obtenues.

Pour exploiter les informations formatées 15, on peut par exemple utiliser le procédé et le système décrits dans la demande de brevet international déposée le même jour que la présente demande au nom de la société Vision IQ et sous le titre : "Procédé et système pour calculer une image transformée à partir d'une image numérique et d'informations formatées relatives à une transformation géométrique (WO 03007238)." Dans cette demande, il est décrit un procédé pour calculer une image transformée à partir d'une image numérique et d'informations formatées 15 relatives à une transformation géométrique, notamment des informations formatées 15 relatives aux distorsions et/ou aberrations chromatiques d'une chaîne d'appareils P3. Le procédé comprend l'étape de calculer l'image transformée à partir d'une approximation de la transformation géométrique. Il en résulte que le calcul est économe en ressource mémoire, en bande passante mémoire, en puissance de calcul et donc en consommation électrique. Il en résulte également que l'image transformée ne présente pas de défaut visible ou gênant pour son utilisation ultérieure.

Pour exploiter les informations formatées 15, on peut par exemple utiliser le procédé et le système décrits dans la demande de brevet international déposée le même jour que la présente demande au nom de la société Vision IQ et sous le titre : "Procédé et système pour modifier une image numérique en prenant en compte son bruit. (WO 03007243)." Dans cette demande, il est décrit un procédé pour calculer une image transformée à partir d'une image numérique et d'informations formatées 15 relatives à des défauts P5 d'une chaîne d'appareils P3. La chaîne d'appareils P3 comporte des appareils de capture d'image et/ou des appareils de restitution d'image. La chaîne d'appareils P3 comporte au moins un appareil P25. Le procédé comprend l'étape de déterminer automatiquement des données caractéristiques à partir des informations formatées 15 et/ou de l'image numérique. Il résulte de la combinaison des traits techniques que l'image transformée ne présente pas de défaut visible ou gênant, notamment de défauts liés au bruit, pour son utilisation ultérieure.

### Moyens de traitement d'images

En se référant notamment aux figures 7 et 13, on va maintenant décrire la notion de moyen de traitement d'images P1. Au sens de la présente invention, on appelle moyen de traitement d'images P1, par exemple un logiciel de traitement d'image 4 et/ou un composant et/ou un équipement et/ou un système permettant de modifier la qualité de l'image 103 en mettant en oeuvre des informations formatées 15, afin de produire une image modifiée, par exemple une image corrigée 71 ou une image corrigée de restitution 97. L'image modifiée peut être destinée à un second appareil de la chaîne d'appareils P3 distinct ou non de l'appareil P25, par exemple l'appareil suivant dans la chaîne d'appareils P3.

La modification de la qualité des images par les moyens de traitement d'images P1 peut consister par exemple à :
- supprimer ou atténuer les défauts P5 d'un ou plusieurs appareils P25 de la chaîne d'appareils P3 dans l'image 103, et/ou
- modifier l'image 103 pour ajouter au moins un défaut P5 d'un ou plusieurs appareils P25 de la chaîne d'appareils P3 de sorte que l'image modifiée ressemble à une image capturée par le ou les appareils P25, et/ou
- modifier l'image 103 pour ajouter au moins un défaut P5 d'un ou plusieurs appareils P25 de la chaîne d'appareils P3 de sorte que la restitution de l'image modifiée ressemble à une image restituée par le ou les appareils P25, et/ou
- modifier l'image 103 en tenant compte des informations formatées 15 liées à des défauts P5 de vision de l'oeil d'un être humain P25 de la chaîne d'appareils P3 de sorte que la restitution de l'image modifiée soit perçue par l'oeil de l'être humain comme corrigée de tout ou partie des défauts P5.

On appelle algorithme de correction, le procédé mis en oeuvre par un moyen de traitement d'images P1 pour modifier la qualité des images selon le défaut P5.

Les moyens de traitement d'images P1 peuvent prendre diverses formes selon l'application.

Les moyens de traitement d'images P1 peuvent être intégrés, en tout ou partie, à l'appareil P25, comme dans les exemples suivants :
- un appareil de capture d'image qui produit des images modifiées, par exemple un appareil photo numérique qui intègre des moyens de traitement d'images P1,
- un appareil de restitution d'image 19 qui affiche ou imprime des images modifiées, par exemple un projecteur vidéo incluant des moyens de traitement d'images P1,
- un appareil mixte qui corrige les défauts de ses éléments, par exemple un scanner / imprimante / télécopieur incluant des moyens de traitement d'images P1,
- un appareil de capture d'image professionnel qui produit des images modifiées, par exemple un endoscope incluant des moyens de traitement d'images P1,

Dans le cas où les moyens de traitement d'images P1 sont intégrés à l'appareil P25, en pratique l'appareil P25 corrige ses propres défauts P5, et les appareils P25 de la chaîne d'appareils P3 peuvent être déterminés par construction, par exemple dans un télécopieur : un scanner et une imprimante ; l'utilisateur peut toutefois n'utiliser qu'une partie des appareils P25 de la chaîne d'appareils P3, par exemple si le télécopieur peut aussi être utilisé comme une imprimante seule.

Les moyens de traitement d'images P1 peuvent être intégrés, en tout ou partie, à un ordinateur par exemple de la façon suivante :
- dans un système d'exploitation, par exemple de marque Windows ou Mac OS, pour modifier automatiquement la qualité des images provenant ou destinées à plusieurs appareils P25 variant selon l'image 103 et/ou dans le temps, par exemple des scanners, appareils photos, imprimantes ; la correction automatique peut avoir lieu par exemple lors de l'entrée de l'image 103 dans le système, ou lors d'une demande d'impression par l'utilisateur,
- dans une application de traitement d'images, par exemple Photoshop™, pour modifier automatiquement la qualité d'images provenant ou destinées à plusieurs appareils P25 variant selon l'image et/ou dans le temps, par exemple des scanners, appareils photos, imprimantes ; la correction automatique peut avoir lieu par exemple lorsque l'utilisateur active une commande de filtre dans Photoshop™,
- dans un appareil de tirage photo (par exemple Photofinishing ou Minilab en anglais), pour modifier automatiquement la qualité d'images provenant de plusieurs appareils photo variant selon l'image et/ou dans le temps, par exemple des jetables, appareils photos numériques, disques compacts ; la correction automatique peut prendre en compte les appareils photo ainsi que le scanner et l'imprimante intégrés et se faire au moment ou les travaux d'impression sont lancés,
- sur un serveur, par exemple sur Internet, pour modifier automatiquement la qualité d'images provenant de plusieurs appareils photo variant selon l'image et/ou dans le temps, par exemple des jetables, appareils photos numériques; la correction automatique peut prendre en compte les appareils photo ainsi que par exemple une imprimante et se faire au moment ou les images 103 sont enregistrées sur le serveur, ou au moment ou des travaux d'impression sont lancés.

Dans le cas où les moyens de traitement d'images P1 sont intégrés à un ordinateur, en pratique les moyens de traitement d'images P1 sont compatible de multiples appareils P25, et au moins un appareil P25 de la chaîne d'appareils P3 peut varier d'une image 103 à l'autre.

Pour fournir, selon un format standard, les informations formatées 15 aux moyens de traitement d'image P1, on peut par associer les informations formatées 15 à l'image 103, par exemple :
- dans un fichier P100,
- en utilisant des identifiant des appareils P25 de la chaîne d'appareils P3, par exemple des données au format Exif dans le fichier P100, pour retrouver les informations formatées 15 dans la base de données de caractéristiques 22.

### Caractéristique variable

On va maintenant décrire en s'appuyant sur la figure 13, la notion de caractéristique variable P6. Selon l'invention, on appelle caractéristique variable P6 un facteur mesurable et variable d'une image 103 à l'autre capturée, modifiée ou restituée par un même appareil P25, et ayant une influence sur le défaut P5, de l'image capturée, modifiée ou restituée par l'appareil P25, notamment :
- une caractéristique variable globale, fixe pour une image 103 donnée, par exemple une caractéristique de l'appareil P25 au moment de la capture ou de restitution de l'image liée à un réglage de l'utilisateur ou liée à un automatisme de l'appareil P25, par exemple la focale,
- une caractéristique variable locale, variable dans une image 103 donnée, par exemple des coordonnées x, y ou ro, theta dans l'image, permettant aux moyens de traitement d'images P1 d'appliquer un traitement local différent selon la zone de l'image.

N'est en général pas considéré comme une caractéristique variable P6: un facteur mesurable et variable d'un appareil P25 à l'autre mais fixe d'une image 103 à l'autre capturée, modifiée ou restituée par un même appareil P25, par exemple la focale pour un appareil P25 à focale fixe.

Les réglages utilisés tels que décrits plus haut, sont des exemples de caractéristiques variables P6.

Les informations formatées 15 peuvent dépendre d'au moins une caractéristique variable P6.

Par caractéristique variable P6, on peut entendre notamment :
- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil P25,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil P25, par exemple un mode de fonctionnement,
- un autre réglage automatique de l'appareil P25,
- une autre mesure réalisée par l'appareil P25.

Dans le cas d'un moyen de restitution 19, la caractéristique variable P6 peut également être appelée caractéristique variable de restitution.

### Valeur de caractéristique variable

On va maintenant décrire en s'appuyant sur la figure 13, la notion de valeur de caractéristique variable P26. On appelle valeur de caractéristique variable P26 la valeur de la caractéristique variable P6 au moment de la capture, modification ou restitution d'une image déterminée, obtenue par exemple à partir de données au format Exif présentes dans le fichier P100. Les moyens de traitement d'image P1 peuvent alors traiter ou modifier la qualité de l'image 103 en fonction des caractéristiques variables P6, en utilisant des informations formatées 15 dépendant des caractéristiques variables P6 et en déterminant la valeur des caractéristiques variables P26.

Dans le cas d'un moyen de restitution 19, la valeur de caractéristique variable P6 peut également être appelée valeur de caractéristique variable de restitution.

### Informations formatées mesurées, informations formatées étendues

Les informations formatées 15 ou une fraction des informations formatées 15 peuvent comprendre des informations formatées mesurées P101, comme représenté sur la figure 15, pour représenter une mesure brute, par exemple un champ mathématique lié aux défauts géométriques de distorsion en un certain nombre de points caractéristiques d'une grille 80. Les informations formatées 15 ou une fraction des informations formatées 15 peuvent comprendre des informations formatées étendues P102, comme représenté sur la figure 15, qui peuvent être calculées à partir des informations formatées mesurées P101, par exemple par interpolation pour les autres points réels que les points caractéristiques de la grille 80. Dans ce qui précède, on a vu qu'une information formatée 15 pouvait dépendre de caractéristiques variables P6. On appelle selon l'invention combinaison P120, une combinaison constituée de caractéristiques variables P6 et de valeurs de caractéristiques variables P26 telle que par exemple une combinaison P120 constituée de la focale, de la mise au point, de l'ouverture de diaphragme, de la vitesse de capture, de l'ouverture, etc et de valeurs associées. Il est difficilement pensable de calculer les informations formatées 15 relatives aux différentes combinaisons P120 d'autant que certaines caractéristiques de la combinaison P120 peuvent varier de façon continue telles que notamment la focale et la distance.

L'invention prévoit de calculer les informations formatées 15 sous la forme d'informations formatées étendues P102 par interpolation à partir d'informations formatées mesurées P101 relatives à une sélection prédéterminée des combinaisons P120 de caractéristiques variables P6 connues.

Par exemple, on utilise des informations formatées mesurées P101 relatives aux combinaisons P120 « focale=2, distance=7, vitesse de capture=1/100 », la combinaison « focale=10, distance=7, vitesse de capture=1/100 », la combinaison « focale=50, distance=7, vitesse de capture=1/100 » pour calculer des informations formatées étendues P102 dépendantes de la caractéristique variable P6 focale. Ces informations formatées étendues P102 permettent notamment de déterminer des informations formatées relatives à la combinaison « focale=25, distance=7 et vitesse de capture=1/100 ».

Les informations formatées mesurées P101 et les informations formatées étendues P102 peuvent présenter un écart d'interpolation P121. L''invention peut comprendre l'étape de sélectionner zéro, une ou plusieurs des caractéristiques variables P6, de telle sorte que l'écart d'interpolation P121, pour les informations formatées étendues P102 obtenues pour les caractéristiques variables P6 ainsi sélectionnées, soit inférieur à un seuil d'interpolation prédéterminé. En effet certaines caractéristiques variables P6 peuvent avoir une influence sur le défaut P5 plus faible que d'autres et faire l'approximation qu'elles sont constantes peut n'introduire qu'une erreur minime ; par exemple le réglage de mise au point peut n'avoir qu'une influence faible sur le défaut vignetage et pour cette raison ne pas faire partie des caractéristiques variables P6 sélectionnées. Les caractéristiques variables P6 peuvent être sélectionnées au moment de la production des informations formatées 15. Il résulte de la combinaison des traits techniques que la modification de la qualité des images met en oeuvre des calculs simples. Il résulte également de la combinaison des traits techniques que les informations formatées étendues P102 sont compactes. Il résulte également de la combinaison des traits techniques que les caractéristiques variables P6 éliminées sont les moins influentes sur le défaut P5. Il résulte de la combinaison des traits techniques que les informations formatées 15 permettent de modifier la qualité des images avec une précision déterminée.

Dans le cas d'un moyen de restitution 19, la combinaison 120 peut également être appelée combinaison de restitution.

Dans le cas d'un moyen de restitution 19, les informations formatées mesurées P101 peuvent également être appelées informations formatées mesurées de restitution.

Dans le cas d'un moyen de restitution 19, les informations formatées étendues P102 peuvent également être appelées informations formatées étendues de restitution.

Dans le cas d'un moyen de restitution 19, les écarts d'interpolation P121 peuvent également être appelée écarts d'interpolation de restitution.

### Modèle paramétrable, paramètres

On va maintenant décrire, en se référant notamment aux figures 5, 6 et 16, la notion de paramètres P9, modèle paramétrable P10. Au sens de l'invention, on appelle modèle paramétrable P10 un modèle mathématique pouvant dépendre des variables P6 et relatif à un ou plusieurs défauts P5 de un ou plusieurs appareils P25 ; le modèle de transformation paramétrable 12, le modèle de transformation paramétrable inverse 212, le modèle de transformation paramétrable de restitution 97, le modèle de transformation paramétrable de restitution 297, décrits précédemment sont des exemples de modèles paramétrable P10 ; par exemple un modèle paramétrable P10 peut être relatif :
- aux défaut de piqué ou flou d'un appareil photo numérique,
- aux défauts géométriques de vignetage d'un appareil photo auquel on veut ressembler,
- aux défauts géométriques de distorsion et aux défauts géométriques d'aberrations chromatiques d'un projecteur,
- aux défaut de piqué ou flou d'un appareil photo jetable combiné avec un scanner.

Les informations formatées 15 relatives à un défaut P5 d'un appareil P25 peuvent se présenter sous la forme des paramètres P9 d'un modèle paramétrable P10 dépendant des caractéristiques variables P6; les paramètres P9 du modèle paramétrable P10 permettent d'identifier une fonction mathématique P16 dans un ensemble de fonctions mathématiques, par exemple des polynômes à plusieurs variables ; les fonctions mathématiques P16 permettent de modifier la qualité de l'image en fonction pour des valeurs déterminés des variables P6.

De sorte que les moyens de traitement d'image P1 peuvent utiliser les paramètres P9 du modèle de transformation paramétrable P10 pour calculer l'image modifiée, par exemple pour calculer l'intensité corrigée ou l'intensité corrigée de restitution d'un point de l'image.

### Plan couleur

On va maintenant décrire, en se référant notamment à la figure 15, la notion de plan couleur P20 d'une image 103 en couleurs. L'image 103 peut être décomposée en plans couleur P20 de diverses façons : nombre de plans (1, 3 ou plus), précision (8 bits non signé, 16 bit signés, flottant...) et signification des plans (par rapport à un espace de couleur standard). L'image 103 peut être décomposée de diverses façons en plans couleur P20: plan couleur rouge constitué des pixels rouges, plan couleur vert, plan couleur bleu (RVB) ou luminance, saturation, teinte... ; d'autre part il existe des espaces de couleur tels PIM, ou des valeurs de pixels négatives sont possibles afin de permettre la représentation de couleurs soustractives qu'il n'est pas possible de représenter en RVB positif ; enfin il est possible de coder une valeur de pixel sur 8bits, 16bits, ou en utilisant des valeurs flottantes. Les informations formatées 15 peuvent être relatives aux plans couleur P20, par exemple en caractérisant différemment les défauts de piqué pour les plans couleur rouge, vert et bleu pour permettre à des moyens de traitement d'image P1 de corriger le défaut de piqué de manière différente pour chaque plan couleur P20.

### Fournir les informations formatées

On va maintenant décrire en s'appuyant notamment sur les figures 8, 13, 15 et 16, une variante de réalisation de l'invention. Pour fournir, selon un format standard, les informations formatées 15 à des moyens de traitement d'image P1, le systèm comprend des moyens de traitement informatiques et le procédé comprend l'étape de renseigner au moins un champ 91 du format standard avec les informations formatées 15. Le champ 91 peut alors comprendre notamment:
- des valeurs relatives aux défauts P5, par exemple sous la forme de paramètres P9, de sorte que les moyens de traitement d'image P1 peuvent utiliser les paramètres P9 pour modifier la qualité des images en tenant compte des défauts P5, et/ou
- des valeurs relatives aux défauts de piqué, par exemple sous la forme de paramètres P9, de sorte que les moyens de traitement d'image P1 peuvent utiliser les paramètres P9 pour modifier la qualité des images en tenant compte des défauts de piqué, et calculer la forme corrigée ou la forme corrigée de restitution d'un point de l'image, et/ou
- des valeurs relatives aux défauts de colorimétrie, par exemple sous la forme de paramètres P9, de sorte que les moyens de traitement d'image P1 peuvent utiliser les paramètres P9 pour modifier la qualité des images en tenant compte des défauts de colorimétrie, et calculer la couleur corrigée ou la couleur corrigée de restitution d'un point de l'image, et/ou
- des valeurs relatives aux défauts géométriques de distorsion et/ou aux défauts géométriques d'aberration chromatique, par exemple sous la forme de paramètres P9, de sorte que les moyens de traitement d'image P1 peuvent utiliser les paramètres P9 pour modifier la qualité des images en tenant compte des aux défauts géométriques de distorsion et/ou aux défauts géométriques d'aberration chromatique, et calculer la position corrigée ou la position corrigée de restitution d'un point de l'image, et/ou
- des valeurs relatives aux défauts géométriques de vignetage, par exemple sous la forme de paramètres P9, de sorte que les moyens de traitement d'image P1 peuvent utiliser les paramètres P9 pour modifier la qualité des images en tenant compte des aux défauts géométriques de vignetage, et calculer l'intensité corrigée ou l'intensité corrigée de restitution d'un point de l'image, et/ou
- des valeurs relatives aux écarts 14, et/ou
- des valeurs fonctions des caractéristiques variables P6 selon l'image 103, par exemples les coefficients et termes d'un polynôme dépendant de la caractéristique variable P6 correspondant à la focale et permettant de calculer l'intensité corrigée d'un point de l'image fonction de sa distance au centre, de sorte que les moyens de traitement d'image peuvent calculer l'intensité corrigée d'un point pour toute valeur de focale de l'appareil de capture d'image au moment ou l'image 103 a été capturée,
- des valeurs relatives à des informations formatées relatives aux plans couleurs P20,
- des valeurs relatives à des informations formatées,
- des valeurs relatives à des informations formatées mesurées,
- des valeurs relatives à des informations formatées étendues.

### Produire des informations formatées

On va maintenant décrire une variante de réalisation de l'invention, en s'appuyant notamment sur les figures 7, 12 et 17. Pour produire les informations formatées 15, liées aux défauts P5 des appareils P25 d'une chaîne d'appareils P3, l'invention peut mettre en oeuvre des moyens de traitement informatique et les premier algorithme, et/ou second algorithme, et/ou troisième algorithme, et/ou quatrième algorithme, et/ou cinquième algorithme, et/ou sixième algorithme, et/ou septième algorithme et/ou huitième algorithme tels que décrits ci-dessus.

### Application de l'invention à la réduction de coût

On appelle réduction de coût, un procédé et système pour diminuer le coût d'un appareil P25 ou d'une chaîne d'appareils P3, notamment le coût de l'optique d'un appareil ou d'une chaîne d'appareils; le procédé consistant à :
- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées 15 relatives aux défauts P5 de l'appareil ou à la chaîne d'appareils, utiliser ces informations formatées pour permettre à des moyens de traitement d'image P1, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

## Revendications

1. Procédé pour fournir, selon un format standard, des informations formatées (15) à des moyens de traitement d'images (P1), notamment des logiciels et/ou des composants ; lesdites informations formatées (15) étant liées aux défauts (P5) d'une chaîne d'appareils (P3); ladite chaîne d'appareils (P3) comprenant notamment au moins un appareil de restitution d'image (19) ; lesdits moyens de traitement d'images (P1) utilisant lesdites informations formatées (15) pour modifier la qualité d'au moins une image (103) provenant de, ou destinée à, ladite chaîne d'appareils (P3);
lesdites informations formatées (15) comportant des données caractérisant des défauts (P5) dudit appareil de restitution des images;
ces défauts étant compris dans le groupe comprenant les défauts de géométrie, les défauts de piqué, les défauts de colorimétrie, les défauts géométriques de distorsion, les défauts géométriques d'aberration chromatique, les défauts géométriques de vignetage, les défauts de contraste, les défauts d'astigmatisme, les défauts d'aberration sphérique
ledit procédé comprenant l'étape de renseigner au moins un champ (91) dudit format standard avec lesdites informations formatées (15) ; ledit champ (91) étant désigné par un nom de champ ; ledit champ (91) contenant au moins une valeur de champ.

2. Procédé selon la revendication 1, dans lequel les informations formatées fournies dépendent d'au moins une caractéristique variable d'une image à l'autre, et ayant une influence sur les défauts, cette caractéristique étant comprise dans le groupe comprenant : la focale de l'optique, le redimensionnement appliqué à l'image, la correction non linéaire de luminance, le rehaussement de contour, le bruit de l'électronique, la distance de mise au point, le type de papier utilisé dans une imprimante, la position d'un projecteur par rapport à l'écran, la balance de blancs utilisée, la compression, le contraste, un réglage automatique ou appliqué par l'utilisateur.

3. Procédé selon la revendication 1 ou 2 ; ledit procédé étant tel que ledit champ (91) contient au moins une valeur relative aux défauts (P5) de piqué et/ou aux défauts de colorimétrie et/ou aux défauts géométriques de distorsion et/ou aux défauts géométriques d'aberration chromatique et/ou aux défauts géométriques de vignetage et/ou aux défauts de contraste dudit appareil de restitution d'images (19).

4. Procédé selon la revendication 3 ; lesdites informations formatées (15) étant composées au moins en partie des paramètres (P9) d'un modèle de transformation paramétrable (12) représentatif des défauts (P5) de piqué de l'appareil de restitution d'image (19) ; ledit procédé étant tel que la ou lesdites valeurs contenues dans ledit champ (91) relatif aux défauts (P5) de piqué sont composées au moins en partie des paramètres (P9) dudit modèle de transformation paramétrable (12);
de sorte que lesdits moyens de traitement d'images (P1) peuvent utiliser lesdits paramètres (P9) dudit modèle de transformation paramétrable (12) pour calculer la forme corrigée ou la forme corrigée de restitution d'un point de l'image (103).

5. Procédé selon la revendication 3 ou 4 ; lesdites informations formatées (15) étant composées au moins en partie des paramètres (P9) d'un modèle de transformation paramétrable (12) représentatif des défauts (P5) de colorimétrie de l'appareil de restitution d'image (19) ; ledit procédé étant tel que la ou lesdites valeurs contenues dans ledit champ (91) relatif aux défauts (P5) de colorimétrie sont composées au moins en partie des paramètres (P9) dudit modèle de transformation paramétrable (12) ;
de sorte que lesdits moyens de traitement d'images (P1) peuvent utiliser lesdits paramètres (P9) dudit modèle de transformation paramétrable (12) pour calculer la couleur corrigée ou la couleur corrigée de restitution d'un point de l'image (103).

6. Procédé selon l'une des revendications 3 à 5 ; lesdites informations formatées (15) étant composées au moins en partie des paramètres (P9) d'un modèle de transformation paramétrable (12) représentatif des défauts (P5) géométriques de distorsion et/ou des défauts (P5) géométriques d'aberration chromatique de l'appareil de restitution d'image (19) ; ledit procédé étant tel que la ou lesdites valeurs contenues dans ledit champ (91) relatif aux défauts (P5) géométriques de distorsion et/ou aux défauts (P5) géométriques d'aberration chromatique sont composées au moins en partie des paramètres (P9) dudit modèle de transformation paramétrable (12) ;
de sorte que lesdits moyens de traitement d'images (P1) peuvent utiliser lesdits paramètres (P9) dudit modèle de transformation paramétrable (12) pour calculer la position corrigée ou la position corrigée de restitution d'un point de l'image (103).

7. Procédé selon l'une des revendications 3 à 6 ; lesdites informations formatées (15) étant composées au moins en partie des paramètres (P9) d'un modèle de transformation paramétrable (12) représentatif des défauts (P5) géométriques de vignetage et/ou des défauts (P5) de contraste de l'appareil de l'appareil de restitution d'image (19) ; ledit procédé étant tel que la ou lesdites valeurs contenues dans ledit champ (91) relatif aux défauts (P5) géométriques de vignetage et/ou aux défauts (P5) de contraste sont composées au moins en partie des paramètres (P9) dudit modèle de transformation paramétrable (12);
de sorte que lesdits moyens de traitement d'images (P1) peuvent utiliser lesdits paramètres (P9) dudit modèle de transformation paramétrable (12) pour calculer l'intensité corrigée ou l'intensité corrigée de restitution d'un point de l'image (103).

8. Procédé selon l'une quelconque des revendications 1 à 7 ; pour fournir, selon un format standard, lesdites informations formatées (15) auxdits moyens de traitement d'images (P1), ledit procédé comprend en outre l'étape d'associer lesdites informations formatées (15) à ladite image (103).

9. Procédé selon la revendication 8 ; ladite image (103) étant diffusée sous la forme d'un fichier (P100); ledit fichier (P100) comprenant en outre lesdites informations formatées (15).

10. Procédé selon l'une quelconque des revendications 1 à 9 ; ledit appareil de restitution d'image (19) comportant au moins une caractéristique variable (P6) selon l'image (103), notamment la focale; au moins un desdits défauts (P5), notamment le défaut géométrique de distorsion, dudit appareil de restitution d'image (19) dépendant de ladite caractéristique variable (P6); ledit procédé étant tel que au moins un desdits champ (91) contient au moins une valeur fonction de ladite caractéristique variable (P6) selon l'image (103) ;
de sorte que les moyens de traitement d'images (P1) peuvent traiter ladite image (103) en fonction desdites caractéristiques variables (P6).

11. Procédé selon l'une quelconque des revendications 1 à 10 ; lesdites informations formatées (15) étant au moins en partie des informations formatées mesurées (P101).

12. Procédé selon l'une quelconque des revendications 1 à 11 ; lesdites informations formatées (15) étant au moins en partie des informations formatées (15) étendues (P102).
**Système**

13. Système pour fournir, selon un format standard, des informations formatées (15) à des moyens de traitement d'images (P1), notamment des logiciels et/ou des composants ; lesdites informations formatées (15) étant liées aux défauts (P5) d'une chaîne d'appareils (P3); ladite chaîne d'appareils (P3) comprenant notamment au moins un appareil de restitution d'image (19) ; lesdits moyens de traitement d'images (P1) utilisant lesdites informations formatées (15) pour modifier la qualité d'au moins une image (103) provenant de, ou destinée à, ladite chaîne d'appareils (P3);
lesdites informations formatées (15) comportant des données caractérisant des défauts (P5) dudit appareil de restitution d'image (19); ces défauts étant compris dans le groupe comprenant les défauts de géométrie, les défauts de piqué, les défauts de colorimétrie, les défauts géométriques de distorsion, les défauts géométriques d'aberration chromatique, les défauts géométriques de vignetage, les défauts de contraste, les défauts d'astigmatisme, les défauts d'aberration sphérique, ledit système comprenant des moyens de traitement informatiques pour renseigner au moins un champ (91) dudit format standard avec lesdites informations formatées (15) ; ledit champ (91) étant désigné par un nom de champ ; ledit champ (91) contenant au moins une valeur de champ.

14. Système selon la revendication 13, ledit système étant tel que les informations formatées fournies dépendent d'au moins une caractéristique variable d'une image à l'autre, et ayant une influence sur les défauts, cette caractéristique étant comprise dans le groupe comprenant : la focale de l'optique, le redimensionnement appliqué à l'image, la correction non linéaire de luminance, le rehaussement de contour, le bruit de l'électronique, la distance de mise au point, le type de papier utilisé dans une imprimante, la position d'un projecteur par rapport à l'écran, la balance de blancs utilisée, la compression, le contraste, un réglage automatique ou appliqué par l'utilisateur.

15. Système selon la revendication 13 ou 14 ; ledit système étant tel que ledit champ (91) contient au moins une valeur relative aux défauts (P5) de piqué et/ou aux défauts de colorimétrie et/ou aux défauts géométriques de distorsion et/ou aux défauts géométriques d'aberration chromatique et/ou aux défauts géométriques de vignetage et/ou aux défauts de contraste dudit appareil de restitution d'images (19).

16. Système selon la revendication 15 ; lesdites informations formatées (15) étant composées au moins en partie des paramètres (P9) d'un modèle de transformation paramétrable (12) représentatif des défauts (P5) de piqué de l'appareil de restitution d'image (19) ; ledit système étant tel que la ou lesdites valeurs contenues dans ledit champ (91) relatif aux défauts (P5) de piqué sont composées au moins en partie des paramètres (P9) dudit modèle de transformation paramétrable (12).

17. Système selon la revendication 15 ou 16 ; lesdites informations formatées (15) étant composées au moins en partie des paramètres (P9) d'un modèle de transformation paramétrable (12) représentatif des défauts (P5) de colorimétrie de l'appareil de restitution d'image (19) ; ledit système étant tel que la ou lesdites valeurs contenues dans ledit champ (91) relatif aux défauts (P5) de colorimétrie sont composées au moins en partie des paramètres (P9) dudit modèle de transformation paramétrable (12).

18. Système selon l'une des revendications 15 à 17 ; lesdites informations formatées (15) étant composées au moins en partie des paramètres (P9) d'un modèle de transformation paramétrable (12) représentatif des défauts (P5) géométriques de distorsion et/ou des défauts (P5) géométriques d'aberration chromatique de l'appareil de capture d'image (1) et/ou de l'appareil de restitution d'image (19) ; ledit système étant tel que la ou lesdites valeurs contenues dans ledit champ (91) relatif aux défauts (P5) géométriques de distorsion et/ou aux défauts (P5) géométriques d'aberration chromatique sont composées au moins en partie des paramètres (P9) dudit modèle de transformation paramétrable (12).

19. Système selon l'une des revendications 15 à 18 ; lesdites informations formatées (15) étant composées au moins en partie des paramètres (P9) d'un modèle de transformation paramétrable (12) représentatif des défauts (P5) géométriques de vignetage et/ou des défauts (P5) de contraste de l'appareil de restitution d'image (19) ; ledit système étant tel que la ou lesdites valeurs contenues dans ledit champ (91) relatif aux défauts (P5) géométriques de vignetage et/ou aux défauts (P5) de contraste sont composées au moins en partie des paramètres (P9) dudit modèle de transformation paramétrable (12).

20. Système selon l'une quelconque des revendications 13 à 19 ; pour fournir, selon un format standard, lesdites informations formatées (15) auxdits moyens de traitement d'images (P1), ledit système comprenant en outre des moyens de traitement informatique pour associer lesdites informations formatées (15) à ladite image (103).

21. Système selon la revendication 20 ; ledit système comportant des moyens de diffusion pour diffuser ladite image (103) sous la forme d'un fichier (P100); ledit fichier (P100) comprenant en outre lesdites informations formatées (15).

22. Système selon l'une quelconque des revendications 13 à 21 ; ledit appareil de restitution d'image (19) comportant au moins une caractéristique variable (P6) selon l'image (103), notamment la focale; au moins un desdits défauts (P5), notamment le défaut géométrique de distorsion, dudit appareil de capture d'image (1) et/ou dudit appareil de restitution d'image (19) dépendant de ladite caractéristique variable (P6); ledit système étant tel que au moins un desdits champ (91) contient au moins une valeur fonction de ladite caractéristique variable (P6) selon l'image (103).

23. Système selon l'une quelconque des revendications 13 à 22 ; lesdites informations formatées (15) étant au moins en partie des informations formatées mesurées (P101).

24. Système selon l'une quelconque des revendications 13 à 23 ; lesdites informations formatées (15) étant au moins en partie des informations formatées étendues (P102).

## Patentansprüche

1. Verfahren zum Liefern von formatierten Informationen (15) in einem Standardformat an Bildverarbeitungsmittel (P1), insbesondere Software und/oder Komponenten; wobei die formatierten Informationen (15) mit den Defekten (P5) einer Kette von Vorrichtungen (P3) verknüpft sind; wobei die Kette von Vorrichtungen (P3) insbesondere mindestens eine Bildwiedergabevorrichtung (19) umfasst; wobei die Bildverarbeitungsmittel (P1) die formatierten Informationen (15) zum Modifizieren der Qualität mindestens eines Bildes (103) verwenden, das aus der Kette von Vorrichtungen (P3) stammt oder dafür bestimmt ist;
wobei die formatierten Informationen (15) Daten umfassen, die Defekte (P5) der Bildwiedergabevorrichtung charakterisieren;
wobei diese Defekte in der Gruppe umfassend Geometriedefekte, Schärfedefekte, Kolorimetriedefekte, geometrische Verzerrungsdefekte, geometrische chromatische Aberrationsdefekte, geometrische Vignettierungsdefekte, Kontrastdefekte, Astigmatismusdefekte, sphärische Aberrationsdefekte enthalten sind,
wobei das Verfahren den Schritt des Vervollständigen mindestens eines Felds (91) des Standardformats mit den formatierten Informationen (15) umfasst; wobei das Feld (91) durch einen Feldnamen gekennzeichnet wird; wobei das Feld (91) mindestens einen Feldwert enthält.

2. Verfahren nach Anspruch 1, wobei die gelieferten formatierten Informationen von mindestens einer Eigenschaft abhängen, die von einem Bild zum anderen variabel ist und einen Einfluss auf die Defekte hat, wobei diese Eigenschaft in der folgenden Gruppe enthalten ist: die Brennweite der Optik, die auf das Bild angewandte Umdimensionierung, die nichtlineare Helligkeitskorrektur, die Erhöhung eines Umrisses, das elektronische Rauschen, der Fokusabstand, die Art von in einem Drucker verwendetem Papier, die Position eines Projektors relativ zur Leinwand, der verwendete Weißabgleich, die Komprimierung, der Kontrast, eine automatische Einstellung oder eine durch den Benutzer angewandte.

3. Verfahren nach Anspruch 1 oder 2; wobei das Verfahren dergestalt ist, dass das Feld (91) mindestens einen Wert in Bezug auf die Schärfedefekte (P5) und/oder auf die Kolorimetriedefekte und/oder auf die geometrischen Verzerrungsdefekte und/oder auf die geometrischen chromatischen Aberrationsdefekte und/oder auf die geometrischen Vignettierungsdefekte und/oder auf die Kontrastdefekte der Bildwiedergabevorrichtung (19) enthält.

4. Verfahren nach Anspruch 3; wobei die formatierten Informationen (15) mindestens teilweise aus den Parametern (P9) eines parametrisierbaren Transformationsmodells (12) zusammengesetzt sind, das die Schärfedefekte (P5) der Bildwiedergabevorrichtung (19) repräsentiert; wobei das Verfahren dergestalt ist, dass der Wert oder die Werte in dem Feld (91) in Bezug auf die Schärfedefekte (P5) mindestens teilweise aus den Parametern (P9) des parametrisierbaren Transformationsmodells (12) zusammengesetzt sind;
dergestalt, dass die Bildverarbeitungsmittel (P1) die Parameter (P9) des parametrisierbaren Transformationsmodells (12) zur Berechnung der korrigierten Form oder der korrigierten Form des Wiedergebens eines Punkts des Bildes (103) verwenden können.

5. Verfahren nach Anspruch 3 oder 4; wobei die formatierten Informationen (15) mindestens teilweise aus den Parametern (P9) eines parametrisierbaren Transformationsmodells (12) zusammengesetzt sind, das die Kolorimetriedefekte (P5) der Bildwiedergabevorrichtung (19) repräsentiert; wobei das Verfahren dergestalt ist, dass der Wert oder die Werte in dem Feld (91) in Bezug auf die Kolorimetriedefekte (P5) mindestens teilweise aus den Parametern (P9) des parametrisierbaren Transformationsmodells (12) zusammengesetzt sind;
dergestalt, dass die Bildverarbeitungsmittel (P1) die Parameter (P9) des parametrisierbaren Transformationsmodells (12) zur Berechnung der korrigierten Farbe oder der korrigierten Farbe des Wiedergebens eines Punkts des Bildes (103) verwenden können.

6. Verfahren nach einem der Ansprüche 3 bis 5, wobei die formatierten Informationen (15) mindestens teilweise aus den Parametern (P9) eines parametrisierbaren Transformationsmodells (12) zusammengesetzt sind, das die geometrischen Verzerrungsdefekte (P5) und/oder die geometrischen chromatischen Aberrationsdefekte (P5) der Bildwiedergabevorrichtung (19) repräsentiert; wobei das Verfahren dergestalt ist, dass der Wert oder die Werte in dem Feld (91) in Bezug auf die geometrischen Verzerrungsdefekte (P5) und/oder die geometrischen chromatischen Aberrationsdefekte (P5) mindestens teilweise aus den Parametern (P9) des parametrisierbaren Transformationsmodells (12) zusammengesetzt sind;
dergestalt, dass die Bildverarbeitungsmittel (P1) die Parameter (P9) des parametrisierbaren Transformationsmodells (12) zum Berechnen der korrigierten Position oder der korrigierten Position des Wiedergebens eines Punkts des Bildes (103) verwenden können.

7. Verfahren nach einem der Ansprüche 3 bis 6; wobei die formatierten Informationen (15) mindestens teilweise aus den Parametern (P9) eines parametrisierbaren Transformationsmodells (12) zusammengesetzt sind, das die geometrischen Vignettierungsdefekte (P5) und/oder die Kontrastdefekte (P5) der Bildwiedergabevorrichtung (19) repräsentiert; wobei das Verfahren dergestalt ist, dass der Wert oder die Werte in dem Feld (91) in Bezug auf die geometrischen Vignettierungsdefekte (P5) und/oder die Kontrastdefekte (P5) mindestens teilweise aus den Parametern (P9) des parametrisierbaren Transformationsmodells (12) zusammengesetzt sind;
dergestalt, dass die Bildverarbeitungsmittel (P1) die Parameter (P9) des parametrisierbaren Transformationsmodells (12) zum Berechnen der korrigierten Intensität oder der korrigierten Intensität des Wiedergebens eines Punkts des Bildes (103) verwenden können.

8. Verfahren nach einem der Ansprüche 1 bis 7; zum Liefern der formatierten Informationen (15) in einem Standardformat an die Bildverarbeitungsmittel (P1), wobei das Verfahren ferner den Schritt des Assoziierens der formatierten Informationen (15) mit dem Bild (103) umfasst.

9. Verfahren nach Anspruch 8; wobei das Bild (103) in Form einer Datei (P100) ausgestrahlt wird; wobei die Datei (P100) ferner die formatierten Informationen (15) umfasst.

10. Verfahren nach einem der Ansprüche 1 bis 9; wobei die Bildwiedergabevorrichtung (19) mindestens eine variable Eigenschaft (P6) gemäß dem Bild (103), insbesondere die Brennweite, umfasst; mindestens einer der Defekte (P5), insbesondere der geometrische Verzerrungsdefekt, der Bildwiedergabevorrichtung (19) von der variablen Eigenschaft (P6) abhängt; und das Verfahren dergestalt ist, dass mindestens eines der Felder (91) mindestens einen Wert enthält, der eine Funktion der variablen Eigenschaft (P6) gemäß dem Bild (103) ist;
dergestalt, dass die Bildverarbeitungsmittel (P1) das Bild (103) gemäß den variablen Eigenschaften (P6) verarbeiten können.

11. Verfahren nach einem der Ansprüche 1 bis 10; wobei die formatierten Informationen (15) mindestens teilweise gemessene formatierte Informationen (P101) sind.

12. Verfahren nach einem der Ansprüche 1 bis 11; wobei die formatierten Informationen (15) mindestens teilweise formatierte Informationen (15) sind, die erweitert wurden (P102).
System

13. System zum Liefern von formatierten Informationen (15) in einem Standardformat an Bildverarbeitungsmittel (P1), insbesondere Software und/oder Komponenten; wobei die formatierten Informationen (15) mit den Defekten (P5) einer Kette von Vorrichtungen (P3) verknüpft sind; wobei die Kette von Vorrichtungen (P3) insbesondere mindestens eine Bildwiedergabevorrichtung (19) umfasst; wobei die Bildverarbeitungsmittel (P1) die formatierten Informationen (15) zum Modifizieren der Qualität mindestens eines Bildes (103) verwenden, das aus der Kette von Vorrichtungen (P3) stammt oder dafür bestimmt ist;
wobei die formatierten Informationen (15) Daten umfassen, die Defekte (P5) der Bildwiedergabevorrichtung (19) charakterisieren; wobei diese Defekte in der Gruppe umfassend Geometriedefekte, Schärfedefekte, Kolorimetriedefekte, geometrische Verzerrungsdefekte, geometrische
chromatische Aberrationsdefekte, geometrische Vignettierungsdefekte, Kontrastdefekte, Astigmatismusdefekte, sphärische Aberrationsdefekte enthalten sind, wobei das System Computerverarbeitungsmittel zum Vervollständigen mindestens eines Felds (91) des Standardformats mit den formatierten Informationen (15) umfasst; wobei das Feld (91) durch einen Feldnamen gekennzeichnet ist; wobei das Feld (91) mindestens einen Feldwert enthält.

14. System nach Anspruch 13, wobei das System dergestalt ist, dass die gelieferten formatierten Informationen von mindestens einer Eigenschaft abhängen, die von einem Bild zum anderen variabel ist und einen Einfluss auf die Defekte hat, wobei diese Eigenschaft in der folgenden Gruppe enthalten ist: die Brennweite der Optik, die auf das Bild angewandte Umdimensionierung, die nichtlineare Helligkeitskorrektur, die Erhöhung eines Umrisses, das elektronische Rauschen, der Fokusabstand, die Art von in einem Drucker verwendetem Papier, die Position eines Projektors relativ zur Leinwand, der verwendete Weißabgleich, die Komprimierung, der Kontrast, eine automatische Einstellung oder eine durch den Benutzer angewandte.

15. System nach Anspruch 13 oder 14; wobei das System dergestalt ist, dass das Feld (91) mindestens einen Wert in Bezug auf die Schärfedefekte (P5) und/oder auf die Kolorimetriedefekte und/oder auf die geometrischen Verzerrungsdefekte und/oder auf die geometrischen chromatischen Aberrationsdefekte und/oder auf die geometrischen Vignettierungsdefekte und/oder auf die Kontrastdefekte der Bildwiedergabevorrichtung (19) enthält.

16. System nach Anspruch 15; wobei die formatierten Informationen (15) mindestens teilweise aus den Parametern (P9) eines parametrisierbaren Transformationsmodells (12) zusammengesetzt sind, das die Schärfedefekte (P5) der Bildwiedergabevorrichtung (19) repräsentiert; wobei das System dergestalt ist, dass der Wert oder die Werte in dem Feld (91) in Bezug auf die Schärfedefekte (P5) mindestens teilweise aus den Parametern (P9) des parametrisierbaren Transformationsmodells (12) zusammengesetzt sind.

17. System nach Anspruch 15 oder 16; wobei die formatierten Informationen (15) mindestens teilweise aus den Parametern (P9) eines
parametrisierbaren Transformationsmodells (12) zusammengesetzt sind, das die Kolorimetriedefekte (P5) der Bildwiedergabevorrichtung (19) repräsentiert; wobei das System dergestalt ist, dass der Wert oder die Werte in dem Feld (91) in Bezug auf die Kolorimetriedefekte (P5) mindestens teilweise aus den Parametern (P9) des parametrisierbaren Transformationsmodells (12) zusammengesetzt sind.

18. System nach Anspruch 15 bis 17; wobei die formatierten Informationen (15) mindestens teilweise aus den Parametern (P9) eines parametrisierbaren Transformationsmodells (12) zusammengesetzt sind, das die geometrischen Verzerrungsdefekte (P5) und/oder die geometrischen chromatischen Aberrationsdefekte (P5) der Bilderfassungsvorrichtung (1) und/oder der Bildwiedergabevorrichtung (19) repräsentiert; wobei das System dergestalt ist, dass der Wert oder die Werte in dem Feld (91) in Bezug auf die geometrischen Verzerrungsdefekte (P5) und/oder die geometrischen chromatischen Aberrationsdefekte (P5) mindestens teilweise aus den Parametern (P9) des parametrisierbaren Transformationsmodells (12) zusammengesetzt sind.

19. System nach Anspruch 15 bis 18; wobei die formatierten Informationen (15) mindestens teilweise aus den Parametern (P9) eines parametrisierbaren Transformationsmodells (12) zusammengesetzt sind, das die geometrischen Vignettierungsdefekte (P5) und/oder die Kontrastdefekte (P5) der Bildwiedergabevorrichtung (19) repräsentiert; wobei das System dergestalt ist, dass der Wert oder die Werte in dem Feld (91) in Bezug auf die geometrischen Vignettierungsdefekte (P5) und/oder die Kontrastdefekte (P5) mindestens teilweise aus den Parametern (P9) des parametrisierbaren Transformationsmodells (12) zusammengesetzt sind.

20. System nach einem der Ansprüche 13 bis 19; zum Liefern der formatierten Informationen (15) an die Bildverarbeitungsmittel (P1) in einem Standardformat, wobei das System ferner Computerverarbeitungsmittel zum Assoziieren der formatierten Informationen (15) mit dem Bild (103) umfasst.

21. System nach Anspruch 20; wobei das System Ausstrahlungsmittel zum Ausstrahlen des Bildes (103) in Form einer Datei (P100) umfasst; wobei die Datei (P100) ferner die formatierten Informationen (15) umfasst.

22. System nach einem der Ansprüche 13 bis 21; wobei die Bildwiedergabevorrichtung (19) mindestens eine variable Eigenschaft (P6) gemäß dem Bild (103), insbesondere die Brennweite, umfasst; wobei mindestens einer der Defekte (P5), insbesondere der geometrische Verzerrungsdefekt, der Bilderfassungsvorrichtung (1) und/oder der Bildwiedergabevorrichtung (19) von der variablen Eigenschaft (P6) abhängt; wobei das System dergestalt ist, dass mindestens eines der Felder (91) mindestens einen Wert enthält, der eine Funktion der variablen Eigenschaft (P6) gemäß dem Bild (103) ist.

23. System nach einem der Ansprüche 13 bis 22; wobei die formatierten Informationen (15) mindestens teilweise gemessene formatierte Informationen (P101) sind.

24. System nach einem der Ansprüche 13 bis 23; wobei die formatierten Informationen (15) mindestens teilweise formatierte Informationen sind, die erweitert wurden (P102).

## Claims

1. Method for supplying, in a standard format, formatted information (15) to image processing means (P1), notably software and/or components; said formatted information (15) being linked to the defects (P5) of a chain of apparatuses (P3); said chain of apparatuses (P3) notably comprising at least one image plotting apparatus (19); said image processing means (P1) using said formatted information (15) to modify the quality of at least one image (103) originating from, or intended for, said chain of apparatuses (P3);
said formatted information (15) comprising data characterizing defects (P5) of said image plotting apparatus;
these defects being included in the group comprising geometry defects, sharpness defects, colorimetry defects, geometrical distortion defects, geometrical chromatic aberration defects, geometrical vignetting defects, contrast defects, astigmatism defects, spherical aberration defects,
said method comprising the step of completing at least one field (91) of said standard format with said formatted information (15); said field (91) being designated by a field name; said field (91) containing at least one field value.

2. Method according to Claim 1, in which the formatted information supplied depends on at least one characteristic that is variable from one image to another and has an influence on the defects, this characteristic being included in the group comprising: the focal length of the optic, the redimensioning applied to the image, the nonlinear brightness correction, the heightening of outline, the electronic noise, the focus distance, the type of paper used in a printer, the position of a projector relative to the screen,
the white balance used, the compression, the contrast, an automatic setting or one applied by the user.

3. Method according to Claim 1 or 2; said method being such that said field (91) contains at least one value relating to the sharpness defects (P5) and/or to the colorimetry defects and/or to the geometrical distortion defects and/or to the geometrical chromatic aberration defects and/or to the geometrical vignetting defects and/or to the contrast defects of said image plotting apparatus (19).

4. Method according to Claim 3; said formatted information (15) being composed at least partly of the parameters (P9) of a parameterizable transformation model (12) representative of the sharpness defects (P5) of the image plotting apparatus (19); said method being such that said value or values contained in said field (91) relating to the sharpness defects (P5) are composed at least partly of the parameters (P9) of said parameterizable transformation model (12);
such that said image processing means (P1) can use said parameters (P9) of said parameterizable transformation model (12) to calculate the corrected form or the corrected form of plotting of a point of the image (103).

5. Method according to Claim 3 or 4; said formatted information (15) being composed at least partly of the parameters (P9) of a parameterizable transformation model (12) representative of the colorimetry defects (P5) of the image plotting apparatus (19); said method being such that said value or values contained in said field (91) relating to the colorimetry defects (P5) are composed at least partly of the parameters (P9) of said parameterizable transformation model (12);
such that said image processing means (P1) can use said parameters (P9) of said parameterizable transformation model (12) to calculate the corrected colour or the corrected colour of plotting of a point of the image (103).

6. Method according to one of Claims 3 to 5; said formatted information (15) being composed at least partly of the parameters (P9) of a parameterizable transformation model (12) representative of the geometrical distortion defects (P5) and/or of the geometrical chromatic aberration defects (P5) of the image plotting apparatus (19); said method
being such that said value or values contained in said field (91) relating to the geometrical distortion defects (P5) and/or to the geometrical chromatic aberration defects (P5) are composed at least partly of the parameters (P9) of said parameterizable transformation model (12);
such that said image processing means (P1) can use said parameters (P9) of said parameterizable transformation model (12) to calculate the corrected position or the corrected position of plotting of a point of the image (103).

7. Method according to one of Claims 3 to 6; said formatted information (15) being composed at least partly of the parameters (P9) of a parameterizable transformation model (12) representative of the geometrical vignetting defects (P5) and/or of the contrast defects (P5) of the image plotting apparatus (19); said method being such that said value or values contained in said field (91) relating to the geometrical vignetting defects (P5) and/or to the contrast defects (P5) are composed at least partly of the parameters (P9) of said parameterizable transformation model (12);
such that said image processing means (P1) can use said parameters (P9) of said parameterizable transformation model (12) to calculate the corrected intensity or the corrected intensity of plotting of a point of the image (103).

8. Method according to any one of Claims 1 to 7; for supplying, in a standard format, said formatted information (15) to said image processing means (P1), said method further comprising the step of associating said formatted information (15) with said image (103).

9. Method according to Claim 8; said image (103) being broadcast in the form of a file (P100); said file (P100) further comprising said formatted information (15).

10. Method according to any one of Claims 1 to 9; said image plotting apparatus (19) comprising at least one variable characteristic (P6) according to the image (103), notably the focal length; at least one of said defects (P5), notably the geometrical distortion defect, of said image plotting apparatus (19) depending on said variable characteristic (P6); said method being such that at least one of said fields (91) contains at least one
value that is a function of said variable characteristic (P6) according to the image (103);
such that the image processing means (P1) can process said image (103) according to said variable characteristics (P6).

11. Method according to any one of Claims 1 to 10; said formatted information (15) being at least partly measured formatted information (P101).

12. Method according to any one of Claims 1 to 11; said formatted information (15) being at least partly formatted information (15) that has been extended (P102).
System

13. System for supplying, in a standard format, formatted information (15) to image processing means (P1), notably software and/or components; said formatted information (15) being linked to the defects (P5) of a chain of apparatuses (P3); said chain of apparatuses (P3) notably comprising at least one image plotting apparatus (19); said image processing means (P1) using said formatted information (15) to modify the quality of at least one image (103) originating from, or intended for, said chain of apparatuses (P3);
said formatted information (15) comprising data characterizing defects (P5) of said image plotting apparatus (19); these defects being included in the group comprising geometry defects, sharpness defects, colorimetry defects, geometrical distortion defects, geometrical chromatic aberration defects, geometrical vignetting defects, contrast defects, astigmatism defects, spherical aberration defects, said system comprising computer processing means for completing at least one field (91) of said standard format with said formatted information (15); said field (91) being designated by a field name; said field (91) containing at least one field value.

14. System according to Claim 13, said system being such that the formatted information supplied depends on at least one characteristic that is variable from one image to another and has an influence on the defects, this characteristic being included in the group comprising: the focal length of the optic, the redimensioning applied to the image, the nonlinear brightness correction, the heightening of outline, the electronic noise, the
focus distance, the type of paper used in a printer, the position of a projector relative to the screen, the white balance used, the compression, the contrast, an automatic setting or one applied by the user.

15. System according to Claim 13 or 14; said system being such that said field (91) contains at least one value relating to the sharpness defects (P5) and/or to the colorimetry defects and/or to the geometrical distortion defects and/or to the geometrical chromatic aberration defects and/or to the geometrical vignetting defects and/or to the contrast defects of said image plotting apparatus (19).

16. System according to Claim 15; said formatted information (15) being composed at least partly of the parameters (P9) of a parameterizable transformation model (12) representative of the sharpness defects (P5) of the image plotting apparatus (19); said system being such that said value or values contained in said field (91) relating to the sharpness defects (P5) are composed at least partly of the parameters (P9) of said parameterizable transformation model (12).

17. System according to Claim 15 or 16; said formatted information (15) being composed at least partly of the parameters (P9) of a parameterizable transformation model (12) representative of the colorimety defects (P5) of the image plotting apparatus (19); said system being such that said value or values contained in said field (91) relating to the colorimetry defects (P5) are composed at least partly of the parameters (P9) of said parameterizable transformation model (12).

18. System according to one of Claims 15 to 17; said formatted information (15) being composed at least partly of the parameters (P9) of a parameterizable transformation model (12) representative of the geometrical distortion defects (P5) and/or of the geometrical chromatic aberration defects (P5) of the image capture apparatus (1) and/or of the image plotting apparatus (19); said system being such that said value or values contained in said field (91) relating to the geometrical distortion defects (P5) and/or to the geometrical chromatic aberration defects (P5) are composed at least partly of the parameters (P9) of said parameterizable transformation model (12).

19. System according to one of Claims 15 to 18; said formatted information (15) being composed at least partly of the parameters (P9) of a parameterizable transformation model (12) representative of the geometrical vignetting defects (P5) and/or of the contrast defects (P5) of the image plotting apparatus (19); said system being such that said value or values contained in said field (91) relating to the geometrical vignetting defects (P5) and/or to the contrast defects (P5) are composed at least partly of the parameters (P9) of said parameterizable transformation model (12).

20. System according to any one of Claims 13 to 19; for supplying, in a standard format, said formatted information (15) to said image processing means (P1), said system further comprising computer processing means for associating said formatted information (15) with said image (103).

21. System according to Claim 20; said system comprising broadcasting means for broadcasting said image (103) in the form of a file (P100); said file (P100) further comprising said formatted information (15).

22. System according to any one of Claims 13 to 21; said image plotting apparatus (19) comprising at least one variable characteristic (P6) according to the image (103), notably the focal length; at least one of said defects (P5), notably the geometrical distortion defect, of said image capture apparatus (1) and/or of said image plotting apparatus (19) depending on said variable characteristic (P6); said system being such that at least one of said fields (91) contains at least one value that is a function of said variable characteristic (P6) according to the image (103).

23. System according to any one of Claims 13 to 22; said formatted information (15) being at least partly measured formatted information (P101).

24. System according to any one of Claims 13 to 23; said formatted information (15) being at least partly formatted information that has been extended (P102).
